(19) Europäisches Patentamt
European Patent Office
Office européen des brevets

(11) EP 2 538 677 A1

(12) EUROPÄISCHE PATENTANMELDUNG

(43) Veröffentlichungstag:
26.12.2012 Patentblatt 2012/52

(51) Int Cl.:
H04N 7/26 (2006.01)   H04N 7/46 (2006.01)
H04N 7/36 (2006.01)   H04N 7/50 (2006.01)

(21) Anmeldenummer: 12180680.6

(22) Anmeldetag: 21.09.2005

(84) Benannte Vertragsstaaten:
AT BE BG CH CY CZ DE DK EE ES FI FR GB GR
HU IE IS IT LI LT LU LV MC NL PL PT RO SE SI
SK TR

(30) Priorität: 15.10.2004 US 619457 P
13.12.2004 DE 102004059978

(62) Dokumentnummer(n) der früheren Anmeldung(en)
nach Art. 76 EPÜ:
05784915.0 / 1 800 488

(71) Anmelder: Fraunhofer-Gesellschaft zur
Förderung der
angewandten Forschung e.V.
80686 München (DE)

(72) Erfinder:
• Schwarz, Heiko
16341 Panketal (DE)
• Marpe, Detlev
12161 Berlin (DE)
• Wiegand, Thomas
14195 Berlin (DE)

(74) Vertreter: Zinkler, Franz
Patentanwälte Schoppe, Zimmermann, Stöckeler
Zinkler & Partner
Postfach 246
82043 Pullach (DE)

Bemerkungen:
Diese Anmeldung ist am 16.08.2012 als
Teilanmeldung zu der unter INID-Code 62 erwähnten
Anmeldung eingereicht worden.

(54) **Vorrichtung und Verfahren zum Erzeugen einer kodierten Videosequenz und zum Dekodieren einer kodierten Videosequenz unter Verwendung einer Zwischen-Schicht-Restwerte-Prädiktion**

(57) Ein Videocodierer führt eine Bewegungs-kompensierte Prädiktion (1906, 1012, 1014, 1016) sowohl in der Basisschicht (1002) als auch in einer Erweiterungsschicht (1004) durch, um dann Bewegungsdaten der Erweiterungsschicht unter Verwendung der Bewegungsdaten aus der Basisschicht zu ermitteln, und/oder um Folgen von Restfehlerbildern nach der Bewegungs-kompensierten Prädiktion in der Erweiterungsschicht unter Verwendung von Folgen von Restfehlerbildern aus der Basisschicht mittels eines Zwischen-Schicht-Prädiktors (1018) zu prädizieren. Auf Decodiererseite wird zur Rückgängigmachung dieser Zwischen-Schicht-Prädiktion ein Zwischen-Schicht-Kombinierer eingesetzt. Damit wird die Datenrate im Vergleich zu Skalierbarkeitsschemen ohne Zwischen-Schicht-Prädiktion bei gleicher Bildqualität verbessert.

FIG. 1a (ENCODER)

EP 2 538 677 A1

**Beschreibung**

Die vorliegende Erfindung bezieht sich auf Videocodiersysteme und insbesondere auf skalierbare Videocodiersysteme, die in Verbindung mit dem Videocodierstandard H.264/AVC oder mit neuen MPEG-Videocodiersystemen einsetzbar sind.

Der Standard H.264/AVC ist Ergebnis eines Videostandardisierungs-Projekts der ITU-T-Videocodier-Expertengruppe (VCEG) und der ISO/IEC-Bewegbild-Expertengruppe (MPEG). Die Hauptziele dieses Standardisierungsvorhabens bestehen darin, ein übersichtliches Videocodier-Konzept mit sehr gutem Kompressionsverhalten zu schaffen, und gleichzeitig eine Netzwerk-freundliche Videodarstellung zu erzeugen, die sowohl Anwendungen mit "Konversationscharakter", wie beispielsweise die Video-Telefonie, sowie Anwendungen ohne Konversationscharakter (Speichern, Rundfunk, Stream-Übertragung) umfassen.

Es existiert neben dem oben-zitierten Standard ISO/IEC 14496-10 auch eine Vielzahl von Publikationen die sich auf den Standard beziehen. Lediglich beispielhaft wird auf "The Emerging H.264-AVC Standard", Ralf Schäfer, Thomas Wiegand und Heiko Schwarz, EBU Technical Review, Januar 2003, verwiesen. Zudem umfasst die Fachveröffentlichung "Overview of the H.264/AVC Video Coding Standard", Thomas Wiegand, Gary J. Sullivan, Gesle Bjontegaard und Ajay Lothra, IEEE Transactions on Circuits and System for Video Technology, July 2003, sowie die Fachveröffentlichung "Context-based adaptive Binary Arithmethic Coding in the H.264/AVC Video Compression Standard", Detlev Marpe, Heiko Schwarz und Thomas Wiegand, IEEE Transactions on Circuits and Systems for Video Technology, September 2003, einen detaillierten Überblick verschiedener Aspekte des Video-Codier-Standards.

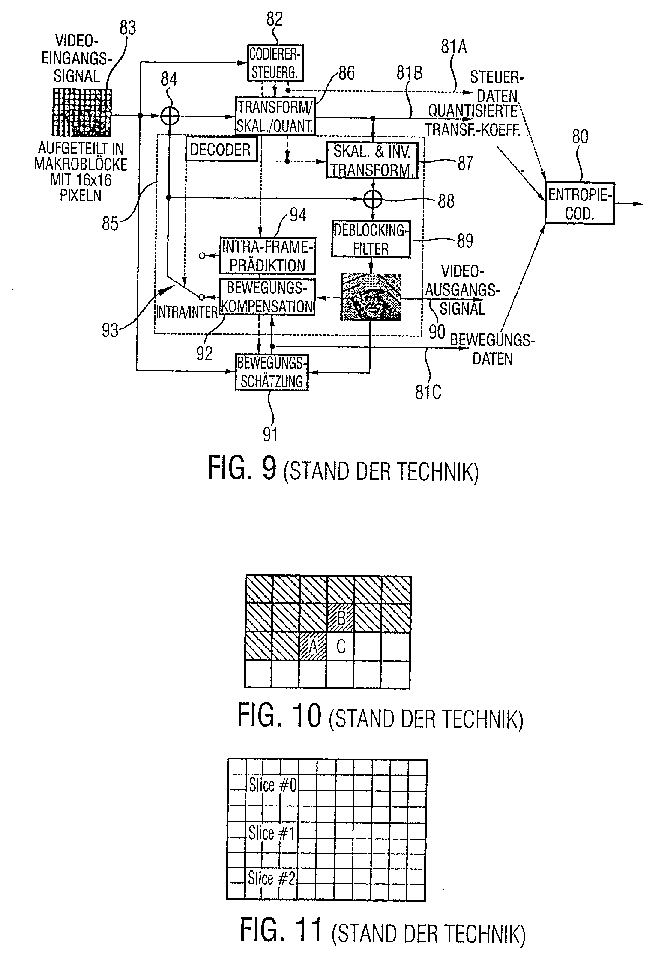

Zum bessren Verständnis wird jedoch nachfolgend anhand der Figuren 9 bis 11 ein Überblick über den Videocodierer/Decodierer-Algorithmus gegeben.

Fig. 9 zeigt einen kompletten Aufbau eines Videocodierers, welcher allgemein aus zwei unterschiedlichen Stufen besteht. Allgemein gesagt, erzeugt die erste Stufe, die prinzipiell Video-bezogen arbeitet, Ausgangsdaten, die schließlich von einer zweiten Stufe, die in Fig. 9 mit 80 bezeichnet ist, einer Entropy-Codierung (Entropy Coding) unterzogen werden. Die Daten sind Daten 81a, quantisierte Transformations-Koeffizienten 81b sowie Bewegungsdaten 81c, wobei diese Daten 81a, 81b, 81c dem Entropie-Codierer 80 zugeführt werden, um ein codiertes Videosignal am Ausgang des Entropie-Codierers 80 zu erzeugen.

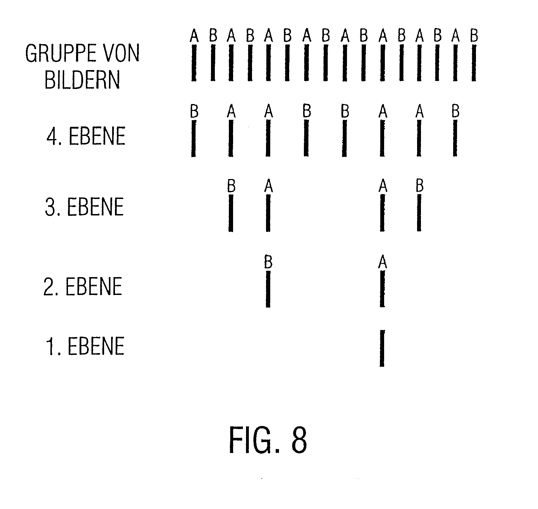

Im Einzelnen wird das Eingangsvideosignal (Input Video Signal) in Makroblöcke aufgeteilt, bzw. gesplittet, wobei jeder Makroblock 16 X 16 Pixel hat. Dann wird die Zuordnung der Makroblöcke zu Slice-Gruppen und Slices (slice = Scheibe) ausgewählt, wonach jeder Makroblock jedes Slices durch das Netz von Betriebsblöcken, wie sie in Fig. 8 gezeigt sind, verarbeitet wird. Es sei darauf hingewiesen, dass eine effiziente Parallel-Verarbeitung von Makroblöcken möglich ist, wenn verschiedene Slices in einem Videobild sind. Die Zuordnung der Makroblöcke zu Slice-Gruppen und Slices wird mittels eines Blocks Codiersteuerung (Coder Control) 82 in Fig. 8 durchgeführt. Es existieren verschiedene Slices, die folgendermaßen definiert sind:

I-Slice: Der I-Slice ist ein Slice, in dem alle Makroblöcke des Slices unter Verwendung einer Intra-Prediction codiert werden.

P-Slice: Zusätzlich zu dem Codiertypen des I-Slices können bestimmte Makroblöcke des P-Slices ebenfalls unter Verwendung einer Inter-Prädiktion mit zumindest einem Bewegungs-Kompensierten-Prädiktionssignal (Motion Compensated Prediction Signal) pro Prädiktionsblock codiert werden.

B-Slice: Zusätzlich zu den Codiertypen, die im P-Slice verfügbar sind, können bestimmte Markoblöcke des B-Slices ebenfalls unter Verwendung einer Inter-Prädiktion mit zwei Bewegungs-Kompensierten-Prädiktionssignalen pro Prädiktionsblock codiert werden.

Die obigen drei Codiertypen sind sehr ähnlich zu denen in früheren Standards, jedoch mit der Ausnahme der Verwendung von Referenzbildern, wie es nachfolgend beschrieben wird. Die folgenden zwei Codiertypen für Slices sind im Standard H.264/AVC neu:

SP-Slice: Es wird auch als Schalt-P-Slice bezeichnet, der so codiert wird, dass ein effizientes Umschalten zwischen unterschiedlichen vorkodierten Bildern möglich wird.

SI-Slice: Der SI-Slice wird auch als Schalt-I-Slice bezeichnet, der eine genaue Anpassung des Makroblocks in einem SP-Slice für einen direkten beliebigen Zugriff und für Fehler-Wiederherstellungszwecke erlaubt.

Insgesamt sind Slices eine Sequenz von Makroblöcken, die in der Reihenfolge eines Raster-Scans verarbeitet werden, wenn nicht eine ebenfalls im Standard definierte Eigenschaft der flexiblen Makroblock-Anordnung FMO (FMO = Flexible Macro Block Ordering) verwendet wird. Ein Bild kann in einen oder mehrere Slices aufgeteilt werden, wie es in Fig. 11 dargestellt ist. Ein Bild ist daher eine Sammlung von einem oder mehreren Slices. Slices sind in dem Sinn selbstständig voneinander, da ihre Syntaxelemente aus dem Bitstrom analysiert (geparst) werden können, wobei die Werte der Abtastwerte in dem Bereich des Bildes, der durch den Slice dargestellt wird, korrekt decodiert werden können, ohne dass Daten von anderen Slices benötigt werden, vorausgesetzt, dass verwendete Referenzbilder sowohl im Codierer als auch im Decodierer identisch sind. Bestimmte Informationen von anderen Slices können jedoch nötig sein, um das Deblocking-Filter über Slice-Grenzen hinweg anzuwenden.

Die FMO-Eigenschaft modifiziert die Art und Weise, wie Bilder in Slices und Makroblöcke partitioniert werden, indem das Konzept der Slice-Gruppen verwendet wird. Jede Slice-Gruppe ist ein Satz von Makroblöcken, die durch eine Makroblock-zu-Slice-Gruppen-Abbildung definiert ist, die durch den Inhalt eines Bildparametersatzes und durch bestimmte Informationen von Slice-Headern spezifiziert ist. Diese Makroblock-zu-Slice-Gruppen-Abbildung besteht aus einer Slice-Gruppen-Identifikationszahl für jeden Makroblock in dem Bild, wobei spezifiziert wird, zu welcher Slice-Gruppe der zugeordnete Makroblock gehört. Jede Slice-Gruppe kann in eine oder mehrere Slices partitioniert werden, so dass ein Slice eine Sequenz von Makroblöcken innerhalb derselben Slice-Gruppe hat, die in der Reihenfolge einer Rasterabtastung innerhalb des Satzes von Makroblöcken einer speziellen Slice-Gruppe verarbeitet wird.

Jeder Makroblock kann in einem von mehreren Codiertypen abhängig von dem Slice-Codiertyp übertragen werden. In all den Slice-Codiertypen werden die folgenden Typen einer Intra-Codierung unterstützt, die als intra-$_{4x4}$ oder intra-$_{16x16}$ bezeichnet werden, wobei zusätzlich ein Chroma-Prädiktions-Modus und auch ein I-$_{PCM}$ Prädiktionsmodus unterstützt werden.

Der intra-$_{4x4}$ Modus basiert auf der Prädiktion von jedem 4x4 Chroma-Block separat und ist gut geeignet zum Codieren von Teilen eines Bildes mit herausragenden Details. Der intra-$_{16x16}$ -Modus führt auf der anderen Seite eine Prädiktion des gesamten 16x16-Chroma-Blocks durch und ist mehr geeignet zum Codieren von "weichen" Bereichen eines Bildes.

Zusätzlich zu diesen zwei Chroma-Prädiktions-Typen wird eine getrennte Chroma-Prädiktion durchgeführt. Als Alternative für intra-$_{4x4}$ und intra-$_{16x16}$ erlaubt der I-$_{4x4}$ Codiertyp, dass der Codierer einfach die Prädiktion sowie die Transformationscodierung überspringt und statt dessen die Werte de codierten Abtastwerte direkt überträgt. Der I-$_{PCM}$-Modus dient den folgenden Zwecken: Er ermöglicht es dem Codierer, die Werte der Abtastwerte präzise darzustellen. ER liefert eine Art und Weise, um die Werte von sehr anormalem Bildinhalt ohne Datenvergrößerung genau darzustellen. Er ermöglicht es ferner, für die Anzahl von Bits eine harte Grenze vorzugeben, die ein Codierer für eine Makroblockhandhabung haben muss, ohne dass die Codiereffizienz leidet.

Im Gegensatz zu früheren Videocodierstandards (nämlich H.263 plus und MPEG-4 Visual), wo die Intra-Prädiktion im Transformationsbereich durchgeführt worden ist, wird die Intra-Prädiktion bei H.264/AVC immer im Raumbereich (Spatial Domain) durchgeführt, und zwar indem auf benachbarte Abtastwerte von vorher codierten Blöcken bezug genommen wird, die links bzw. oberhalb des zu prädizierenden Blocks liegen (Fig. 10). Dies kann in bestimmten Umgebungen, bei denen Übertragungsfehler auftreten, eine Fehlerfortpflanzung mit sich bringen, wobei diese Fehlerfortpflanzung aufgrund der Bewegungskompensation (Motion Compensation) in intercodierten Makroblöcken stattfindet. Daher kann ein begrenzter Intra-Codiermodus signalisiert werden, der eine Prädiktion nur von intra-codierten benachbarten Makroblöcken ermöglicht.

Wenn der intra-$_{4x4}$-Modus verwendet wird, wird jeder 4x4-Block aus räumlich benachbarten Abtastwerten vorhergesagt. Dei 16 Abtastwerte des 4x4-Blocks werden unter Verwendung von vorher decodierten Abtastwerten in benachbarten Blöcken vorhergesagt. Für jeden 4x4-Block kann einer von 9 Prädiktionsmodi verwendet werden. Zusätzlich zur "DC-Prädiktion (wo ein Wert verwendet wird, um den gesamten 4x4-Block vorher zu sagen), werden 8 Richtungs-Prädiktions-Modi spezifiziert. Diese Modi sind geeignet, um Richtungsstrukturen in einem Bild, wie beispielsweise Kanten bei verschiedenen Winkeln vorherzusagen.

Zusätzlich zu den Intra-Makroblock-Codiertypen werden verschiedene prädiktive oder bewegungs-kompensierte Codiertypen als P-Makroblocktypen spezifiziert. Jeder P-Makroblock-Typ entspricht einer spezifischen Aufteilung des Makroblocks in die Blockformen, die für eine bewegungs-kompensierte Prädiktion verwendet werden. Aufteilungen mit Luma-Blockgrössen von 16x16, 16x8, 8x8 oder 8x16 Abtastwerten werden durch die Syntax unterstützt. Im Falle von Aufteilungen von 8x8 Abtastwerten wird ein zusätzliches Syntaxelement für jede 8x8-Aufteilung übertragen. Dieses Syntaxelement spezifiziert, ob die entsprechende 8x8-Aufteilung ferner in Aufteilungen von 8x4, 4x8 oder 4x4 Luma-Abtastwerten und entsprechenden Chroma-Abtastwerten weiter partitioniert wird.

Das Prädiktionssignal für jeden prädiktiv-codierten MxM-Lumablock wird erhalten, indem ein Bereich des entsprechenden Referenzbildes, der durch einen Translations-Bewegungsvektor und einen Bildreferenzindex spezifiziert ist, verschoben wird. Wenn somit ein Makroblock unter Verwendung von vier 8x8-Aufteilungen codiert wird, und wenn jede 8x8-Aufteilung ferner in vier 4x4-Aufteilungen aufgeteilt wird, kann eine maximale Menge an 16 Bewegungsvektoren für einen einzigen P-Makroblock im Rahmen des sogenannten Bewegungsfelds bzw. Motion Field übertragen werden.

Der Quantisierungsparameter-Slice QP wird verwendet, um die Quantisierung der Transformationskoeffizienten bei H.264/AVC festzulegen. Der Parameter kann 52 Werte annehmen. Diese Werte sind so angeordnet, dass eine Zunahme von 1 im Hinblick auf den Quantisierungsparameter eine Erhöhung der Quantisierung schrittweise um etwa 12 % bedeutet. Dies bedeutet, dass eine Erhöhung des Quantisierungsparameters um 6 eine Zunahme der Quantisierer-Schrittweite um genau einen Faktor von 2 mit sich bringt. Es sei darauf hingewiesen, dass eine Änderung der Schrittgröße um etwa 12 % ebenfalls in etwa eine Reduktion der Bitrate um etwa 12 % bedeutet.

Die quantisierten Transformationskoeffizienten eines Blocks werden allgemein in einem Zick-Zack-Weg abgetastet und unter Verwendung von Entropie-Codierverfahren weiter verarbeitet. Die 2x2-DC-Koeffizienten der Chroma-Komponente werden in Raster-Scan-Reihenfolge abgetastet und alle Invers-Transformations-Operationen innerhalb H. 264/AVC können unter Verwendung von nur Additionen und Shift-Operationen von 16-Bit-Ganzzahlwerten implementiert werden.

Bezugnehmend auf Fig. 9 wird das Eingangssignal zunächst Bild für Bild in einer Videosequenz, jeweils für jedes Bild gesehen, in die Makroblöcke mit 16x16 Pixeln aufteilt. Hierauf wird jedes Bild einem Subtrahierer 84 zugeführt, der das ursprüngliche Bild subtrahiert, das von einem Decodierer 85 geliefert wird. Der im Encodierer enthalten ist. Das Subtraktionsergebnis, also die Restsignale im RaumBereich (Spatial Domain), werden nunmehr transformiert, skaliert und quantisiert (Block 86), um die quantisierten Transformationskoeffizienten auf der Leitung 81b zu erhalten. Zur Erzeugung des Subtraktionssignals, das in den Subtrahierer 874 eingespeist wird, werden die quantisierten Transformationskoeffizienten zunächst wieder skaliert und invers transformiert (Block 87), um einem Addierer 88 zugeführt zu werden, dessen Ausgang das Deblocking-Filter 89 speist, wobei am Ausgang des Deblocking-Filters das Ausgangsvideosignal, wie es z.B. ein Decodierer decodieren wird, z.B. zu Kontrollzwecken überwacht werden kann (Ausgang 90).

Unter Verwendung des decodierten Ausgangssignals am Ausgang 90 wird dann eine Bewegungsschätzung (Motion Estimation) in einem Block 91 durchgeführt. Zur Bewegungsschätzung in Block 91 wird, wie es aus Fig. 9 ersichtlich ist, ein Bild des ursprünglichen Input-Videosignals zugeführt. Der Standard erlaubt zwei verschiedene Bewegungsschätzungen, nämlich eine Vorwärts-Bewegungs-Schätzung und eine Rückwärts-Bewegungs-Schätzung. Bei der Vorwärts-Bewegungs-Schätzung wird die Bewegung des aktuellen Bilds im Hinblick auf das vorhergehende Bild abgeschätzt. Dagegen wird bei der Rückwärts-Bewegungs-Schätzung die Bewegung des aktuellen Bilds unter Verwendung des zukünftigen Bilds abgeschätzt. Die Ergebnisse der Bewegungsschätzung (Block 91) werden einem Bewegungskompensations-Block (Motion Compensation) 92 zugeführt, der insbesondere dann, wenn ein Schalter 93 auf den Inter-Prädiktions-Modus geschaltet ist, wie es in Fig. 9 der Fall ist, eine bewegungs-kompensierte Inter-Prädiktion durchgeführt. Steht der Schalter 93 dagegen auf Intra-Frame-Prädiktion, so wird eine Intra-Frame-Prädiktion unter Verwendung eines Blocks 490 durchgeführt. Hierzu werden die Bewegungsdaten nicht benötigt, da für eine Intra-Frame-Prädiktion keine Bewegungskompensation ausgeführt wird.

Der Bewegungsschätzungsblock 91 erzeugt Bewegungsdaten bzw. Bewegungsfelder, wobei Bewegungsdaten bzw. Bewegungsfelder, die aus Bewegungsvektoren (Motion Vectors) bestehen, zum Decodierer übertragen werden, damit eine entsprechende inverse Prädiktion, also Rekonstruktion unter Verwendung der Transformationskoeffizienten und der Bewegungsdaten durchgeführt werden kann. Es sei darauf hingewiesen, dass im Falle einer Vorwärts-Prädiktion der Bewegungsvektor aus dem unmittelbar vorhergehenden Bild bzw. auch aus mehreren vorhergehenden Bildern berechnet werden kann. Darüber hinaus sei darauf hingewiesen, dass im Falle einer Rückwärts-Prädiktion ein aktuelles Bild unter Verwendung des unmittelbar angrenzenden zukünftigen Bildes und natürlich auch unter Verwendung von weiteren zukünftigen Bildern berechnet werden kann.

Nachteilig an dem in Fig. 9 dargestellten Videocodierer-Konzept ist dass es keine einfache Skalierbarkeitsmöglichkeit bietet. Wie es in der Technik bekannt ist, versteht man unter dem Ausdruck "Skalierbarkeit" ein Codierer/ Decodier-Konzept, bei dem der Codierer einen skalierten Datenstrom liefert. Der skalierte Datenstrom umfasst eine Basis-Skalierungsschicht sowie eine oder mehrere Erweiterungs-Skalierungsschichten. Die Basis-Skalierungsschicht umfasst eine Darstellung des zu codierenden Signals allgemein gesagt mit geringerer Qualität, jedoch auch mit geringerer Datenrate. Die Erweiterungs-Skalierungsschicht enthält eine weitere Darstellung des Videosignals, die typischerweise zusammen mit der Darstellung des Videosignals in der Basis-Skalierungsschicht eine Darstellung mit verbesserter Qualität im Hinblick auf die Basis-Skalierungsschicht liefert. Dagegen hat die Erweiterungs-Skalierungsschicht selbstverständlich einen eigenen Bitbedarf, so dass die Anzahl der Bits zur Darstellung des zu codierenden Signals mit jeder Erweiterungsschicht zunimmt.

Ein Decodierer wird je nach Ausgestaltung bzw. nach Möglichkeit entweder nur die Basis-Skalierungsschicht decodieren, um eine vergleichsweise qualitativ schlechte Darstellung des durch das codierte Signal dargestellten Bildsignals zu liefern. Mit jeder "Hinzunahme" einer weiteren Skalierungsschicht kann der Decodierer jedoch schrittweise die Qualität des Signals (zu Lasten der Bitrate) verbessern.

Je nach Implementierung und nach Übertragungskanal von einem Codierer zu einem Decodierer wird immer wenigstens die Basis-Skalierungsschicht übertragen, da die Bitrate der Basis-Skalierungsschicht typischerweise so gering ist, dass auch ein bisher begrenzter Übertragungskanal ausreichend sein wird. Erlaubt der Übertragungskanal nicht mehr Bandbreite für die Anwendung, so wird nur die Basis-Skalierungsschicht, nicht aber eine Erweiterungs-Skalierungsschicht übertragen. Dies hat zur Folge, dass der Decodierer lediglich eine niederqualitative Darstellung des Bildsignals erzeugen kann. Im Vergleich zum unskalierten Fall, bei dem die Datenrate so hoch gewesen wäre, dass eine Übertragung das Übertragungssystem überhaupt nicht möglich gewesen wäre, ist die niederqualitative Darstellung von Vorteil. Erlaubt der Übertragungskanal die Übertragung von einer oder mehrerer Erweiterungsschichten, so wird der Codierer auch eine oder mehrere Erweiterungsschichten zum Decodierer übertragen, so dass dieser je nach Anforderung schrittweise die Qualität des ausgegebenen Videosignals erhöhen kann.

Im Hinblick auf die Codierung von Videosequenzen kann man zwei unterschiedliche Skalierungen unterscheiden. Die eine Skalierung ist die zeitliche Skalierung, dahingehend, dass z.B. nicht alle Video-Einzelbilder einer Videosequenz übertragen werden, sondern dass- zur Reduzierung der Datenrate - beispielsweise nur jedes zweite Bild, jedes dritte Bild, jedes vierte Bild, etc. übertragen wird.

Die andere Skalierung ist die SNR-Skalierbarkeit (SNR = Signal to Noise Ratio), bei der jede Skalierungsschicht, also sowohl die Basis-Skalierungsschicht als auch die erste, zweite, dritte... Erweiterungs-Skalierungsschicht sämtliche zeitlichen Information umfasst, jedoch mit einer unterschiedlichen Qualität. So hätte die Basis-Skalierungsschicht zwar eine niedrige Datenrate, jedoch ein geringes Signal/Rausch-Verhältnis, wobei dieses Signal/Rausch-Verhältnis dann, mit Hinzunahme jeweils einer Erweiterungs-Skalierungsschicht schrittweise verbessert werden kann.

Das in Fig. 9 dargestellte Codierer-Konzept ist dahingehend problematisch, dass es darauf basiert, dass lediglich Restwerte durch den Subtrahierer 84 erzeugt werden, und dann weiter verarbeitet werden. Diese Restwerte werden aufgrund von Prädiktionsalgorithmen berechnet, und zwar in der in Fig. 9 gezeigten Anordnung, die unter Verwendung der Blöcke 86, 87, 88, 89, 93, 94 und 84 eine geschlossene Schleife bildet, wobei in der geschlossenen Schleife ein Quantisierungs-Parameter eingeht, und zwar in den Blöcken 86, 87. Würde nunmehr eine einfache SNR-Skalierbarkeit dahingehend implementiert werden, dass z.B. jedes prädizierte Restsignal zunächst mit einer groben Quantisierer-Schrittweite quantisiert wird, und dann, schrittweise, unter Verwendung von Erweiterungsschichten mit feineren Quantisierungs-Schrittweiten quantisiert werden würde, so würde dies folgende Konsequenzen haben. Aufgrund der inversen Quantisierung und der Prädiktion insbesondere im Hinblick auf die Bewegungsschätzung (Block 91) und die Bewegungskompensation (Block 92), die unter Verwendung des ursprünglichen Bildes einerseits und des quantisierten Bildes andererseits stattfinden, ergibt sich ein "Auseinanderlaufen" der Quantisierungs-Schrittweiten" sowohl im Encodierer als auch im Decodierer. Dies führt dazu, dass die Erzeugung der Erweiterungs-Skalierungsschichten auf Encoder-Seite sehr problematisch wird. Ferner wird die Verarbeitung der Erweiterungs-Skalierungsschichten auf der Decodiererseite zumindest im Hinblick auf die im Standard H.264/AVC definierten Elemente unmöglich. Grund hierfür ist die anhand von Fig. 9 dargestellte geschlossene Schleife im Video-Encodierer, in der die Quantisierung enthalten ist.

Im Standardisierungsdokument JVT-I 032 t1 mit dem Titel "SNR-Scalable Extension of H.264/AVC, Heiko Schwarz, Detlev Marpe und Thomas Wiegand, vorgestellt beim neunten JVT-Meeting vom 2. bis zum 5. Dezember 2003 in San Diego wird eine skalierbare Erweiterung zu H.264/AVC vorgestellt, die eine Skalierbarkeit sowohl hinsichtlich der Zeit als auch des Signal/Rausch-Verhältnisses (bei gleicher oder unterschiedlicher Zeitgenauigkeit) umfasst. Hierzu wird eine Lifting-Darstellung zeitlicher Subbandzerlegungen eingeführt, die die Verwendung bekannter Verfahren zur Bewegungs-kompensierten Prädiktion erlaubt.

Wavelet-basierte Videocodier-Algorithmen, bei denen Lifting-Implementierungen für die Wavelet-Analyse und für die Wavelet-Synthese eingesetzt werden, sind in J.-R. Ohm, "Complexity and delay analysis of MCTF interframe wavelet structures", ISO/IECJTC1/WG11 Doc.M8520, July 2002, beschrieben. Anmerkungen zur Skalierbarkeit finden sich auch in D. Taubman, "Successive refinement of video: fundamental issues, past efforts and new directions", Proc. of SPIE (VCIP'03), vol. 5150, pp. 649-663, 2003, wobei hierfür jedoch erhebliche Änderungen an Codiererstrukturen nötig sind. Erfindungsgemäß wird dagegen ein Codierer/Decodierer-Konzept erreicht, das einerseits die Skalierbarkeitsmöglichkeit hat und das andererseits auf standardkonformen Elementen, insbesondere z.B. für die Bewegungskompensation, aufbauen kann.

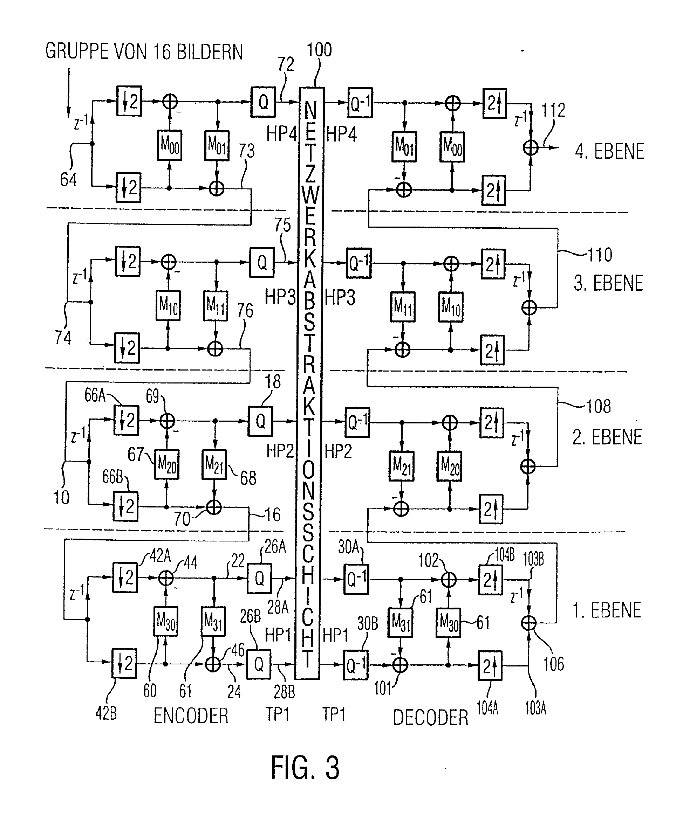

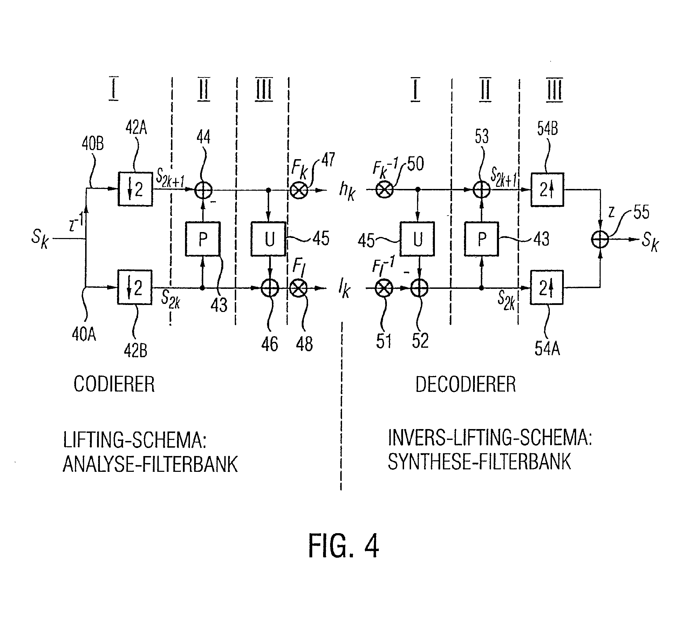

Bevor detailliert auf einen Encoder/Docoder-Aufbau anhand von Fig. 3 eingegangen wird, sei zunächst anhand von Fig. 4 ein grundsätzliches Lifting-Schema auf Seiten des Codierers bzw. ein Invers-Lifting-Schema auf Seiten des Decodierers dargestellt. Detaillierte Ausführungen zu den Hintergründen der Kombination von Lifting-Schemen und Wavelet-Transformationen finden sich in W. Sweldens, "A custom design construction of biorthogonal wavelets", J. Appl. Comp. Harm. Anal., vol. 3 (no. 2), pp. 186-200, 1996 und I. Daubechies und W. Sweldens, "Factoring wavelet transforms into lifting Steps", J. Fourier Anal. Appl., vol. 4 (no.3), pp. 247-269, 1998. Im allgemeinen besteht das Lifting-Schema aus drei Schritten, dem Polyphasen-Zerlegungsschritt, dem Prädiktions-Schritt und dem Update-Schritt (Aktualisierungs-Schritt).

Der Zerlegungs-Schritt umfasst eine Aufteilung des eingangsseitigen Datenstroms in eine identische erste Kopie für einen unteren Zweig 40a sowie eine identische Kopie für einen oberen Zweig 40b. Ferner wird die identische Kopie des oberen Zweigs 40b um eine Zeitstufe ($z^{-1}$) verzögert, so dass ein Abtastwert $s_{2k+1}$ mit einem ungeradzahligen Index k zum gleichen Zeitpunkt wie ein Abtastwert mit einem geraden Index $s_{2k}$ durch einen jeweiligen Dezimierer bzw. Downsampler 42a, 42b läuft. Der Dezimierer 42a bzw. 42b reduziert die Anzahl der Samples im oberen bzw. im unteren Zweig 40b, 40a durch Eliminieren jedes jeweils zweiten Abtastwerts.

Der zweite Bereich II, der sich auf den Prädiktion-Schritt bezieht, umfasst einen Prädiktionsoperator 43 sowie einen Subtrahierer 44. Der dritte Bereich, also der Aktualisierungs-Schritt umfasst einen Aktualisierungs-Operator 45 sowie einen Addierer 46. Ausgangsseitig existieren noch zwei Normierer 47, 48, zum Normieren des Hochpass-Signals $h_k$ (Normierer 47) und zum Normieren des Tiefpass-Signals $1_k$ durch den Normierer 48.

Im einzelnen führt die Polyphasenzerlegung dazu, dass die geradzahligen und ungeradzahligen Abtastwerte einen gegebenen Signals s[k] getrennt werden. Da die Korrelationsstruktur typischerweise eine Lokalcharakteristik zeigt, sind die geraden und ungeraden Polyphasenkomponenten hochkorreliert. Daher wird in einem anschließenden Schritt eine Prädiktion (P) der ungeraden Abtastwerte unter Verwendung der geraden Abtastwerte durchgeführt. Der entsprechende Prädiktions-Operator (P) für jeden ungeraden Abtastwert $s_{odd}[k]=s[2k+1]$ ist eine lineare Kombination der benachbarten geraden Abtastwerte $s_{even}[k]=s[2k]$, d.h.

$$\mathbf{P}(s_{\text{even}})[k] = \sum_l p_l s_{\text{even}}[k+l] \; .$$

Als Ergebnis des Prädiktions-Schritts werden die ungeradzahligen Abtastwerte durch ihre entsprechenden Prädiktions-Restwerte

$$h[k] = s_{\text{odd}}[k] - \mathbf{P}(s_{\text{even}})[k]$$

ersetzt. Es sei darauf hingewiesen, dass der Prädiktionsschritt äquivalent zum Durchführen eines Hochpass-Filters einer Zwei-Kanal-Filterbank ist, wie es in I. Daubechies und W. Sweldens, "Factoring wavelet transforms into lifting steps", J. Fourier Anal. Appl. vol 4 (no.3), pp. 247-269, 1998 dargelegt ist.

Im dritten Schritt des Lifting-Schemas wird eine Tiefpass-Filterung durchgeführt, indem die geraden Abtastwerte $s_{even}[k]$ durch eine lineare Kombination der Prädiktions-Restwerte h[k] ersetzt werden. Der entsprechende Aktualisierungs-Operator U ist gegeben durch

$$\mathbf{U}(h)[k] = \sum_l u_l h[k+l] \; .$$

Durch Ersetzen der geraden Abtastwerte mit

$$l[k] = s_{\text{even}}[k] + \mathbf{U}(h)[k]$$

kann das gegebene Signal s[k] schließlich durch l(k) und h(k) dargestellt werden, wobei jedes Signal jedoch die halbe Abtastrate hat. Da sowohl der Aktualisierungs-Schritt als auch der Prädiktions-Schritt vollständig invertierbar sind, kann die entsprechende Transformation als kritisch abgetastete Perfekt-Rekonstruktions-Filterbank interpretiert werden. In der Tat kann gezeigt werden, dass jegliche biorthogonale Familie von Wavelet-Filtern durch eine Sequenz von einem oder mehreren Prädiktions-Schritten und einem oder mehreren Aktualisierungs-Schritten realisiert werden kann. Für eine Normierung der Tiefpaß- und Hochpass-Komponenten werden, wie es ausgeführt worden ist, die Normierer 47 und 48 mit geeignet gewählten Skalierungsfaktoren $F_1$ und $F_h$ versorgt.

Das Invers-Lifting-Schema, das der Synthese-Filterbank entspricht, ist in Fig. 4, auf der rechten Seite, gezeigt. Es besteht einfach aus der Anwendung des Prädiktions- und Aktualisierungs-Operators in umgekehrter Reihenfolge und mit umgekehrten Vorzeichen, gefolgt von der Rekonstruktion unter Verwendung der geraden und ungeraden Polyphasenkomponenten. Im einzelnen umfasst der in Fig. 4 rechte gezeigte Decodierer somit wieder einen ersten Decodiererbereich I, einen zweiten Decodiererbereich II sowie einen dritten Decodiererbereich III. Der erste Decodiererbereich macht die Wirkung des Aktualisierungs-Operators 45 rückgängig. Dies geschieht dadurch, dass das durch einen weiteren Normierer 50 zurück-normierte Hochpass-Signal dem Aktualisierungs-Operator 45 zugeführt wird. Das Ausgangssignal des decodierseitigen Aktualisierungs-Operators 45 wird dann nun, im Gegensatz zum Addierer 46 in Fig. 4, einem Subtrahierer 52 zugeführt. Entsprechend wird mit dem Ausgangssignal des Prädiktors 43 vorgegangen, dessen Ausgangssignal nunmehr nicht, wie auf Codiererseite einem Subtrahierer zugeführt wird, sondern dessen Ausgangssignal nunmehr einem Addierer 53 zugeführt wird. Nunmehr findet ein Upsampling des Signals in jedem Zweig um den Faktor

EP 2 538 677 A1

2 statt (Blöcke 54a, 54b). Hierauf wird der obere Zweig um einen Abtastwert in die Zukunft geschoben, was äquivalent zum Verzögern des unteren Zweigs ist, um dann eine Addition der Datenströme auf dem oberen Zweig und dem unteren Zweig in einem Addierer 55 durchzuführen, um das rekonstruierte Signal $s_k$ am Ausgang der Synthese-Filterbank zu erhalten.

Durch den Prädiktor 43 bzw. den Aktualisierer 45 können verschiedene Wavelets implementiert werden. Falls das sogenannte Haar-Wavelet implementiert werden soll, sind der Prädiktions-Operator und der Aktualisierungs-Operator durch folgende Gleichung gegeben

$$\mathbf{P}_{\mathrm{Haar}}(s_{\mathrm{even}})[k] = s[2k] \quad \text{und} \quad \mathbf{U}_{\mathrm{Haar}}(h)[k] = \frac{1}{2}h[k],$$

derart, dass

$$h[k] = s[2k+1] - s[2k] \quad \text{und} \quad l[k] = s[2k] + \frac{1}{2}h[k] = \frac{1}{2}(s[2k] + s[2k+1])$$

dem nicht-normierten Hochpaß- bzw. Tiefpaß- (Analyse-) Ausgangssignal des Haar-Filters entsprechen.

Im Falle des 5/3-Biorthogonal-Spline-Wavelets haben das Tiefpaß- und das Hochpaß-Analyse-Filter dieses Wavelets 5 bzw. 3 Filtertaps, wobei die entsprechende Skalierungsfunktion ein B-Spline der Ordnung 2 ist. In Codieranwendungen für nicht-bewegte Bilder (Still-Images, wie beispielsweise JPEG 2000) wird dieses Wavelet für ein zeitliches Subband-Codierschema verwendet. In einer Lifting-Umgebung sind die entsprechenden Prädiktions- und Aktualisierungs-Operatoren der 5/3-Transformation folgendermaßen gegeben

$$\mathbf{P}_{5/3}(s_{\mathrm{even}})[k] = \frac{1}{2}(s[2k] + s[2k+2]) \quad \text{und} \quad \mathbf{U}_{5/3}(h)[k] = \frac{1}{4}(h[k] + h[k-1]).$$

Fig. 3 zeigt ein Blockschaltbild einer Codierer/Decodierer-Struktur mit beispielhaften vier Filterebenen sowohl auf Seiten des Codierers als auch auf Seiten des Decodierers. Aus Fig. 3 ist zu ersehen, dass die erste Filterebene, die zweite Filterebene, die dritte Filterebene und die vierte Filterebene bezogen auf den Codierer identisch sind. Die Filterebenen bezogen auf den Decodierer sind ebenfalls identisch. Auf Codiererseite umfasst jede Filterebene als zentrale Elemente einen Rückwärts-Prädiktor $M_{i0}$ sowie einen Vorwärts-Prädiktor $M_{i1}$ 61. Der Rückwärts-Prädiktor 60 entspricht prinzipiell dem Prädiktor 43 von Fig. 4, während der Vorwärts-Prädiktor 61 dem Aktualisierer von Fig. 4 entspricht.

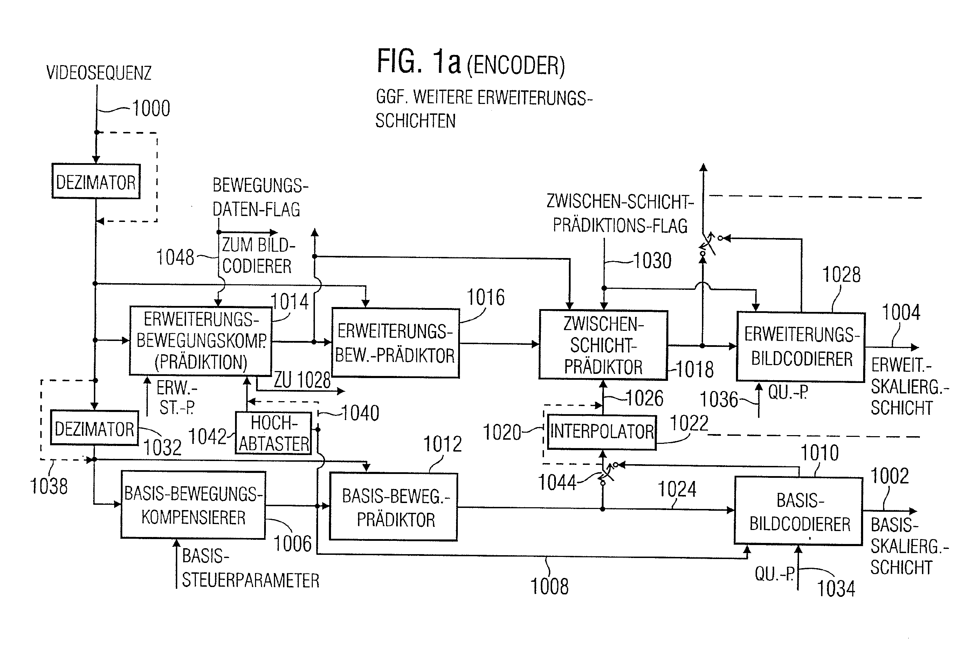

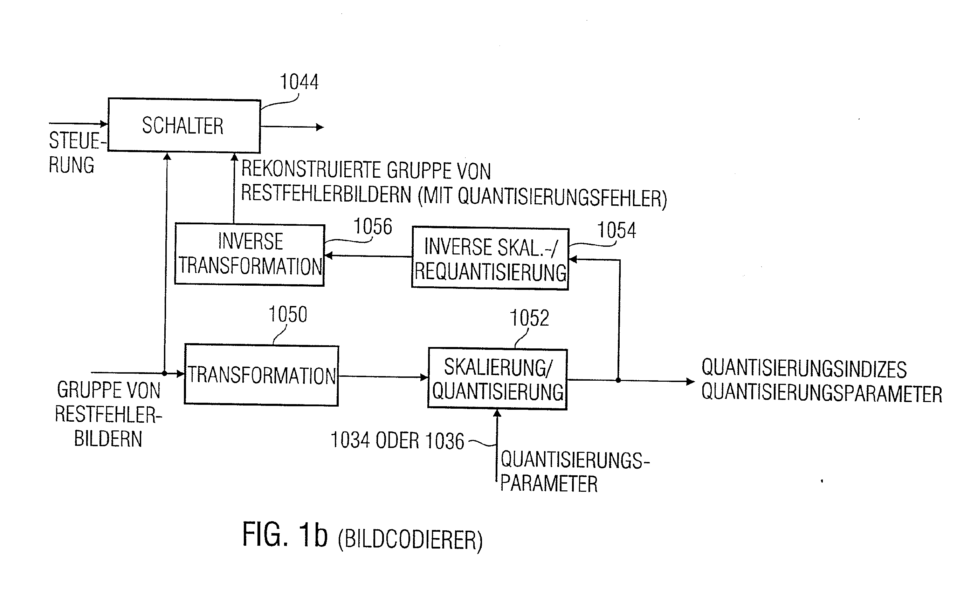

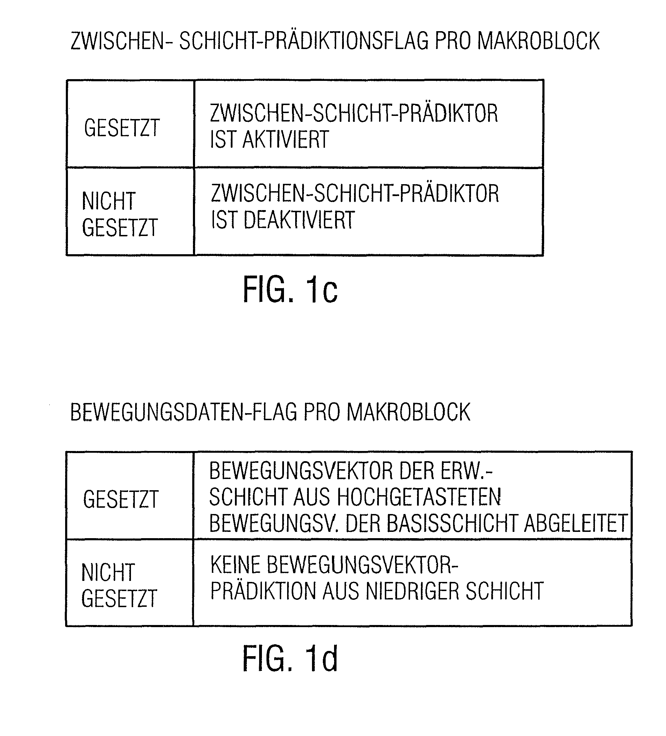

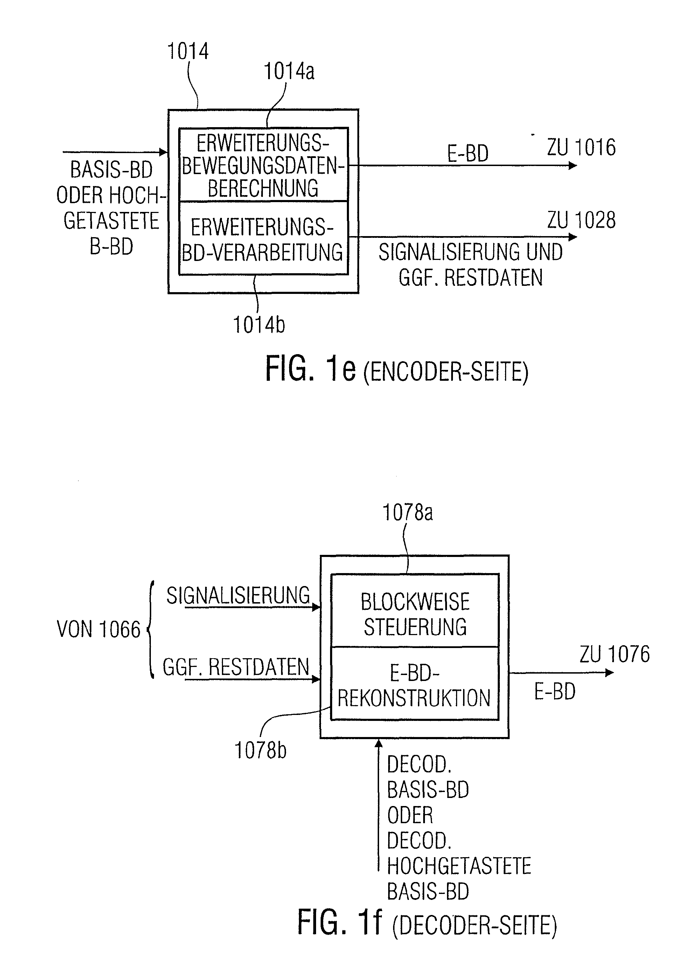

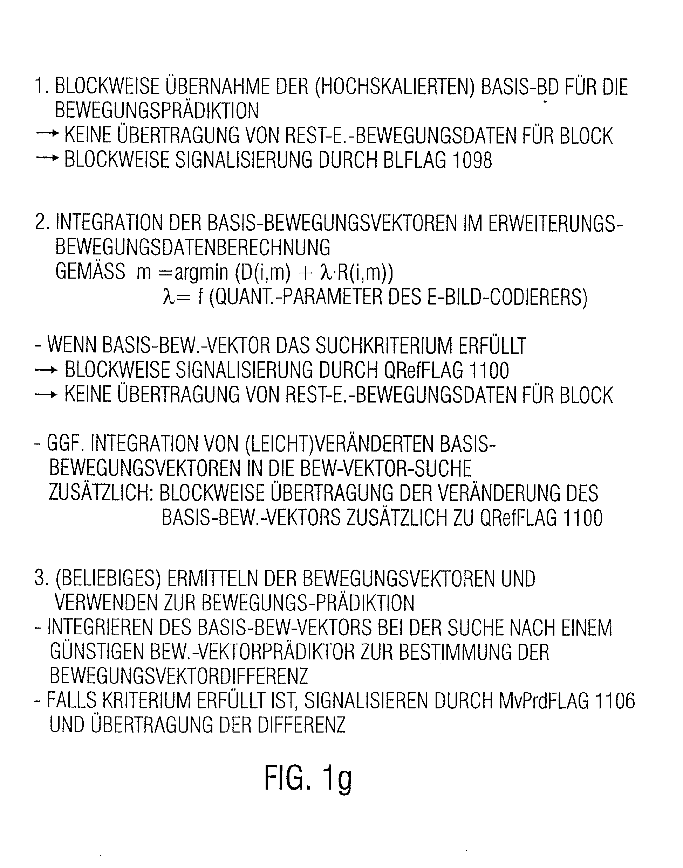

Im Unterschied zu Fig. 4 sei darauf hingewiesen, dass sich Fig. 4 auf einen Strom von Abtastwerten bezieht, bei denen ein Abtastwert einen ungeradzahligen Index 2k+1 hat, während ein anderer Abtastwert einen geradzahligen Index 2k hat. Die Notation in Fig. 3 bezieht sich jedoch, wie es bereits anhand von Fig. 1 dargelegt worden ist, auf eine Gruppe von Bildern anstatt auf eine Gruppe von Abtastwerten. Hat ein Bild beispielsweise eine Anzahl von Abtastwerten bzw. Pixeln, so wird dieses Bild insgesamt eingespeist. Dann wird das nächste Bild eingespeist etc. Es existieren somit nicht mehr ungeradzahlige und geradzahlige Abtastwerte, sondern ungeradzahlige und geradzahlige Bilder. Erfindungsgemäß wird das für ungeradzahlige und geradzahlige Abtastwerte beschriebene Lifting-Schema auf ungeradzahlige bzw. geradzahlige Bilder, von denen jedes eine Vielzahl von Abtastwerten hat, angewendet. Aus dem abtastwert-weisen Prädiktor 43 von Fig. 4 wird nunmehr die Rückwärts-Bewegungskompensations-Prädiktion 60, während aus dem abtastwert-weisen Aktualisierer 45 die Bildweise Vorwärts-Bewegungskompensations-Prädiktion 61 wird.

Es sei darauf hingewiesen, dass die Bewegungsfilter, die aus Bewegungsvektoren bestehen, und die Koeffizienten für die Blöcke 60 und 61 darstellen, jeweils für zwei aufeinander bezogene Bilder berechnet und als Seiteninformationen vom Codierer zum Decodierer übertragen werden. Von wesentlichem Vorteil beim erfindungsgemäßen Konzept ist jedoch die Tatsache, dass die Elemente 91, 92, wie sie anhand von Fig. 9 beschrieben sind und im Standard H.264/AVC standardisiert sind, ohne weiteres dazu verwendet werden können, um sowohl die Bewegungsfelder $M_{i0}$ als auch die Bewegungsfelder $M_{i1}$ zu berechnen. Für das erfindungsgemäße Konzept muss daher kein neuer Prädiktor/ Aktualisierer eingesetzt werden, sondern es kann der bereits bestehende, untersuchte und auf Funktionalität und Effizienz überprüfte im Videostandard genannte Algorithmus für die Bewegungskompensation in Vorwärtsrichtung oder in Rückwärtsrichtung eingesetzt werden.

Insbesondere zeigt die in Fig. 3 dargestellt allgemeine Struktur der verwendeten Filterbank eine zeitliche Zer-

7

legung des Videosignals mit einer Gruppe von 16 Bildern, die an einem Eingang 64 eingespeist werden. Die Zerlegung ist eine dyadische zeitliche Zerlegung des Videosignals, wobei bei dem in Figur 3 gezeigten Ausführungsbeispiel mit 4 Ebenen $2^4$=16 Bilder, also eine Gruppengröße von 16 Bildern benötigt wird, um auf der Darstellung mit der kleinsten zeitlichen Auflösung, also auf den Signalen am Ausgang 28a und am Ausgang 28b anzukommen. Werden daher 16 Bilder gruppiert, so führt dies zu einer Verzögerung von 16 Bildern, was das in Fig. 3 gezeigte Konzept mit vier Ebenen für interaktive Anwendungen eher problematisch macht. Wird daher auf interaktive Anwendungen abgezielt, so wird es bevorzugt, kleinere Gruppen von Bildern zu bilden, wie beispielsweise vier oder acht Bilder zu gruppieren. Dann wird die Verzögerung entsprechend reduziert, so dass auch der Einsatz für interaktive Anwendungen möglich wird. In Fällen, in denen Interaktivität nicht benötigt wird, beispielsweise zu Speicherzwecken etc. kann die Anzahl der Bilder in einer Gruppe, also die Gruppengröße, entsprechend erhöht werden, beispielsweise auf 32, 64, etc. Bilder.

So wird eine interaktive Anwendung des Haar-basierten bewegungs-kompensierten Lifting-Schemas verwendet, das aus einer Rückwärts-Bewegungskompensations-Prädiktion ($M_{i0}$), wie in H.264/AVC besteht, und das ferner einen Aktualisierungs-Schritt umfasst, der eine Vorwärtsbewegungskompensation ($M_{i1}$) umfasst. Sowohl der Prädiktions-Schritt als auch der Aktualisierung-Schritt verwenden den Bewegungskompensationsprozess, wie er in H.264/AVC dargestellt it. Ferner wird nicht nur die Bewegungskompensation verwendet, sondern auch das in Fig. 9 mit dem Bezugszeichen 89 bezeichnet Deblocking-Filter 89.

Die zweite Filterebene umfasst wieder Downsampler 66a, 66b, einen Subtrahierer 69, einen Rückwärts-Prädiktor 67, einen Vorwärts-Prädiktor 68 sowie einen Addierer 70 und eine Weiterverarbeitungseinrichtung, um an einem Ausgang der Weiterverarbeitungseinrichtung das erste und das zweite Hochpass-Bild der zweiten Ebene auszugeben, während am Ausgang des Addierers 70 das erste und das zweite Tiefpass-Bild der zweiten Ebene ausgegeben werden.

Der Codierer in Fig. 3 umfasst zusätzlich eine dritte Ebene sowie eine vierte Ebene, wobei in den Eingang 64 der vierten Ebene eine Gruppe von 16 Bildern eingespeist wird. An einem Hochpass-Ausgang 72 der vierten Ebene, der auch als HP4 bezeichnet ist, werden mit einem Quantisierungs-Parameter Q quantisierte und entsprechend weiterverarbeitete acht Hochpass-Bilder ausgegeben. Entsprechend werden an einem Tiefpass-Ausgang 73 der vierten Filterebene acht Tiefpass-Bilder ausgegeben, die in einem Eingang 74 der dritten Filterebene eingespeist wird. Die Ebene ist wiederum wirksam, um an einem Hochpass-Ausgang 75, der auch mit HP3 bezeichnet ist, vier Hochpass-Bilder zu erzeugen und um einem Tiefpass-Ausgang 76 vier Tiefpass-Bilder zu erzeugen, die in den Eingang 10 der zweiten Filterebene eingespeist werden und zerlegt werden.

Es sei besonders darauf hinzuweisen, dass die durch eine Filterebene verarbeitete Gruppe von Bildern nicht unbedingt Videobilder sein müssen, die von einer ursprünglichen Videosequenz stammen, sondern auch Tiefpass-Bilder sein können, die von einer nächsthöheren Filterebene an einem Tiefpass-Ausgang der Filterebene ausgegeben worden sind.

Ferner sei darauf hingewiesen, dass das in Fig. 3 gezeigte Codierer-Konzept für sechzehn Bilder ohne weiteres auf acht Bilder reduziert werden kann, wenn einfach die vierte Filterebene weggelassen wird und die Gruppe von Bildern in den Eingang 74 eingespeist wird. Genauso kann das in Fig. 3 gezeigte Konzept auch ohne weiteres auf eine Gruppe von zweiunddreißig Bildern erweitert werden, indem eine fünfte Filterebene hinzugefügt wird, und indem die dann sechzehn Hochpass-Bilder an einem Hochpass-Ausgang der fünften Filterebene ausgegeben werden und die sechzehn Tiefpass-Bilder am Ausgang der fünften Filterebene in den Eingang 64 der vierten Filterebene eingespeist werden.

Auf Decodiererseite wird ebenfalls das baumartige Konzept der Codiererseite angewendet, jedoch nun nicht mehr, wie auf Codiererseite von der höheren Ebene zur niedrigeren Ebene, sondern nunmehr, auf der Decodiererseite, von der niedrigeren Ebene zur höheren Ebene. Hierzu wird von einem Übertragungsmedium, das schematisch als Network Abstraction Layer 100 bezeichnet ist, der Datenstrom empfangen und der empfangene Bitstrom wird zunächst einer Invers-Weiterverarbeitung unter Verwendung der Invers-Weiterverarbeitungseinrichtungen unterzogen, um eine rekonstruierte Version des ersten Hochpass-Bildes der ersten Ebene am Ausgang der Einrichtung 30a und eine rekonstruierte Version des Tiefpass-Bildes der ersten Ebene am Ausgang des Blocks 30b von Fig. 3 zu erhalten. Dann wird, in Analogie zur rechten Hälfte von Fig. 4, zunächst die Vorwärts-Bewegungskompensations-Prädiktion mittels des Prädiktors 61 rückgängig gemacht, um dann das Ausgangssignal des Prädiktors 61 von der rekonstruierten Version des Tiefpass-Signals zu subtrahieren (Subtrahierer 101).

Das Ausgangssignal des Subtrahierers 101 wird in einen Rückwärts-Kompensations-Prädiktor 60 eingespeist, um ein Prädiktionsergebnis zu erzeugen, das in einem Addierer 102 zur rekonstruierten Version des Hochpass-Bildes addiert wird. Hierauf werden beide Signale, also die Signale im unteren Zweig 103a, 103b auf die doppelte Abtastrate gebracht, und zwar unter Verwendung der Upsampler 104a, 104b, wobei dann das Signal auf dem oberen Zweig je nach Implementierung verzögert bzw. "beschleunigt" wird. Es sei darauf hingewiesen, dass das Upsampling durch die Brücke 104a, 104b einfach durch Einfügen von einer Anzahl von Nullen, die gleich der Anzahl von Samples für ein Bild entspricht, durchgeführt wird. Die Verschiebung um die Verzögerung eines Bildes durch das mit $z^{-1}$ gezeigte Element im oberen Zweig 103b gegenüber dem unteren Zweig 103a bewirkt, dass die Addition durch einen Addierer 106 dazu führt, dass ausgangsseitig bezüglich des Addierers 106 die beiden Tiefpass-Bilder der zweiten Ebene nacheinander vorliegen.

Die rekonstruierte Version des ersten und des zweiten Tiefpass-Bildes der zweiten Ebene werden dann in das decodiererseitige Invers-Filter der zweiten Ebene eingespeist und dort, zusammen mit den übertragenen Hochpaß-Bildern der zweiten Ebene wieder durch die identische Implementierung der Invers-Filterbank kombiniert, um an einem Ausgang 108 der zweiten Ebene eine Folge von vier Tiefpass-Bildern der dritten Ebene zu haben. Die vier Tiefpass-Bilder der dritten Ebene werden in einer Invers-Filterebene der dritten Ebene mit den übertragenen Hochpaß-Bildern der dritten Ebene kombiniert, um an einem Ausgang 110 des Invers-Filters der dritten Ebene acht Tiefpass-Bilder der vierten Ebene in aufeinanderfolgendem Format zu haben. Diese acht Tiefpass-Bilder der dritten Ebene werden dann, in einem Invers-Filter der vierten Ebene mit den acht Hochpaß-Bildern der vierten Ebene, die vom Übertragungsmedium 100 über den Eingang HP4 empfangen werden, wieder wie anhand der ersten Ebene besprochen, kombiniert, um an einem Ausgang 112 des Invers-Filters der vierten Ebene eine rekonstruierte Gruppe von 16 Bildern zu erhalten.

In jeder Stufe der Analyse-Filterbank werden somit zwei Bilder, also entweder ursprüngliche Bilder oder Bilder die Tiefpaß-Signale darstellen und in einer nächsthöheren Ebene erzeugt worden sind, in ein Tiefpass-Signal und in ein Hochpass-Signal zerlegt. Das Tiefpass-Signal kann als Darstellung der Gemeinsamkeiten der Eingangsbilder betrachtet werden, während das Hochpass-Signal als Darstellung der Unterschiede zwischen den Eingangsbildern betrachtet werden kann. In der entsprechenden Stufe der Synthese-Filterbank werden die beiden Eingangsbilder unter Verwendung des Tiefpass-Signals und des Hochpass-Signals wieder rekonstruiert.

Da im Syntheseschritt die inversen Operationen des Analyseschritts durchgeführt werden, garantiert die Analyse/Synthese-Filterbank (ohne Quantisierung selbstverständlich) eine perfekte Rekonstruktion.

Die einzigen auftretenden Verluste kommen aufgrund der Quantisierung in den Weiterverarbeitungseinrichtungen z.B. 26a, 26b, 18 vor. Wird sehr fein quantisiert, so wird ein gutes Signal-Rausch-Verhältnis erreicht. Wird dagegen sehr grob quantisiert, so wird ein relativ schlechtes Signal-Rausch-Verhältnis, jedoch bei niedriger Bitrate, also bei niedrigem Bedarf, erreicht.

Ohne SNR-Skalierbarkeit könnte bereits mit dem in Fig. 3 dargestellten Konzept zumindest eine Zeit-Skalierungssteuerung implementiert werden. Hierzu wird eine Zeit-Skalierungs-Steuerung 120 eingesetzt, die ausgebildet ist, um eingangsseitig die Hochpaß- bzw. Tiefpass-Ausgänge bzw. die Ausgänge der Weiterverarbeitungseinrichtungen (26a, 26b, 18 ...) zu erhalten, um aus diesen Teildatenströmen TP1, HP1, HP2, HP3, HP4 einen skalierten Datenstrom zu erzeugen, der in einer Basis-Skalierungsschicht die weiterverarbeitende Version des ersten Tiefpass-Bildes und des ersten Hochpass-Bildes hat. In einer ersten Erweiterungs-Skalierungsschicht könnte dann die weiterverarbeitende Version der zweiten Hochpass-Bildes untergebracht sein. In einer zweiten Erweiterungs-Skalierungsschicht könnten dann die weiterverarbeiteten Versionen der Hochpass-Bilder dritter Ebene untergebracht sein, während in einer dritten Erweiterungs-Skalierungsschicht die weiterverarbeitenden Versionen der Hochpass-Bilder vierter Ebene eingebracht sind. Damit könnte ein Decodierer allein aufgrund der Basis-Skalierungsschicht bereits eine zeitlich gering qualitative Sequenz von Tiefpass-Bildern niedriger Ebene erzeugen, also pro Gruppe von Bildern, zwei Tiefpass-Bilder erste Ebene. Mit Hinzunahme jeder Erweiterungs-Skalierungsschicht kann die Anzahl der rekonstruierten Bilder pro Gruppe immer verdoppelt werden. Die Funktionalität des Decodierers wird typischerweise von einer Skalierungs-Steuerung gesteuert, die ausgebildet ist, um zu erkennen, wie viel Skalierungsschichten im Datenstrom enthalten sind bzw. wie viele Skalierungsschichten vom Decodierer beim Decodieren berücksichtigt werden sollen.

Das JVT-Dokument JVT-J 035, mit dem Titel "SNR-Scalable Extension of H.264/AVC" Heiko Schwarz, Detlev Marpe und Thomas Wiegand, vorgestellt beim zehnten JVT-Treffen in Waikoloa Hawaii, 8. bis 12. Dezember 2003, zeigt eine SNRskalierbare Erweiterung des in den Fig. 3 und 4 dargestellten zeitlichen Zerlegungsschemas. Insbesondere wird eine zeitliche Skalierungsschicht in einzelne "SNR-Skalierungsunterschichten" aufgeteilt, wobei eine SNR-Basisschicht dahingehend erhalten wird, dass eine bestimmte zeitliche Skalierungsschicht mit einer ersten, gröberen Quantisiererschrittweite quantisiert wird, um die SNR-Basisschicht zu erhalten. Dann wird unter anderem eine inverse Quantisierung durchgeführt, und das Ergebnissignal aus der inversen Quantisierung wird von dem ursprünglichen Signal subtrahiert, um ein Differenzsignal zu erhalten, das dann mit einer feineren Quantisiererschrittweite quantisiert wird, um die zweite Skalierungsschicht zu erhalten. Die zweite Skalierungsschicht wird jedoch wieder unter anderem requantisiert mit der feineren Quantisiererschrittweite, um das nach der Requantisierung erhaltene Signal von dem ursprünglichen Signal zu subtrahieren, um ein weiteres Differenzsignal zu erhalten, das, wieder nach Quantisierung nun jedoch mit einer feineren Quantisiererschrittweite eine zweite SNR-Skalierungsschicht bzw. eine SNR-Enhancement-Layer darstellt.

So hat sich herausgestellt, dass die vorstehend beschriebenen Skalierbarkeitsschemata, die auf der Bewegungs-kompensierten zeitlichen Filterung (MCTF; MCTF = Motion Compensated Temporal Filtering) basieren, bereits eine hohe Flexibilität im Hinblick auf die zeitliche Skalierbarkeit und auch die SNR-Skalierbarkeit liefern. Allerdings existiert noch eine Problematik dahingehend, dass die Bitrate mehrerer Skalierungsschichten zusammengenommen immer noch deutlich über der Bitrate liegt, die erreichbar ist, wenn Bilder mit der höchsten Qualität ohne Skalierbarkeit codiert werden würden. Wegen der Seiteninformationen für die verschiedenen Skalierungsschichten mag von skalierbaren Codierern die Bitrate des nicht-skalierten Falls nie erreicht werden. Allerdings sollte die Bitrate eines Datenstroms mit mehreren Skalierungsschichten wenigstens so nahe wie möglich an die Bitrate des nicht-skalierten Falls herankommen können.

Des weiteren sollte das Skalierbarkeitskonzept eine hohe Flexibilität für alle Skalierbarkeitsarten liefern, also eine hohe Flexibilität sowohl in zeitlicher Hinsicht als auch in räumlicher Hinsicht als auch in SNR-Hinsicht.

Die hohe Flexibilität ist besonders dort wichtig, wo bereits Bilder geringer Auflösung ausreichend wären, jedoch eine höhere zeitliche Auflösung wünschenswert wäre. Eine solche Situation ergibt sich beispielsweise dann, wenn schnelle Änderungen in Bildern vorhanden sind, wie beispielsweise bei Videos von Mannschaftssportarten, wo sich viele Personen zusätzlich zum Ball gleichzeitig bewegen.

Die Aufgabe der vorliegenden Erfindung besteht darin, ein Konzept zum flexiblen Codieren/Decodieren zu schaffen, das trotz der Tatsache, dass es ein skalierbares Konzept ist, eine möglichst geringe Bitrate liefert.

Diese Aufgabe wird durch eine Vorrichtung zum Erzeugen einer codierten Videosequenz nach Patentanspruch 1, ein Verfahren zum Erzeugen einer codierten Videosequenz nach Patentanspruch 15, eine Vorrichtung zum Decodieren einer codierten Videosequenz nach Patentanspruch 16, ein Verfahren zum Decodieren einer codierten Videosequenz nach Patentanspruch 26, ein Computerprogramm nach Patentanspruch 27 oder ein Computer-lesbares Medium nach Patentanspruch 28 gelöst.

Der vorliegenden Erfindung liegt die Erkenntnis zugrunde, dass Bitraten-Reduzierungen nicht nur mit einer innerhalb einer Skalierungsschicht durchgeführten Bewegungs-kompensierten Prädiktion erreicht werden können, sondern dass weitere Bitraten-Reduktionen bei gleichbleibender Bildqualität dadurch erhalten werden, dass eine Zwischen-Skalierungsschicht-Prädiktion der Restbilder nach der Bewegungs-kompensierten Prädiktion von einer niedrigeren Schicht, beispielsweise der Basisschicht, zu einer höheren Schicht, wie beispielsweise der Erweiterungsschicht, durchgeführt wird.

Es wurde herausgefunden, dass innerhalb derselben zeitlichen Skalierungsschicht die Restwerte der einzelnen hier betrachteten anderen Skalierungsschichten nach der Bewegungs-kompensierten Prädiktion, die vorzugsweise im Hinblick auf die Auflösung oder im Hinblick auf das Signal-Rausch-Verhältnis (SNR) skaliert sind, auch zwischen den Restwerten Korrelationen haben. Erfindungsgemäß werden diese Korrelationen dadurch vorteilhaft ausgenutzt, dass auf Codiererseite für die Erweiterungs-Skalierungsschicht ein Zwischen-Schicht-Prädiktor vorgesehen wird, der mit einem Zwischen-Schicht-Kombinierer auf Decodiererseite korrespondiert. Vorzugsweise ist dieser Zwischen-Schicht-Prädiktor adaptiv ausgelegt, um z.B. für jeden Makroblock zu entscheiden, ob sich eine Zwischen-Schicht-Prädiktion lohnt, oder ob die Prädiktion eher zu einem Bitratenanstieg führen würde. Das letztere ist der Fall, wenn im Hinblick auf einen nachfolgenden Entropie-Codierer das Prädiktions-Restsignal größer als das ursprüngliche Bewegungs-Kompensations-Restsignal der Erweiterungsschicht wird. Diese Situation wird jedoch in vielen Fällen nicht auftreten, so dass der Zwischen-Schicht-Prädiktor aktiviert ist und zu einer deutlichen Bitraten-Reduktion führt.

Bei einem bevorzugten Ausführungsbeispiel der vorliegenden Erfindung wird ferner ebenfalls eine Prädiktion der Bewegungsdaten der Erweiterungsschicht vorgenommen. So hat sich ferner herausgestellt, dass innerhalb verschiedener Qualitäts-Skalierungsschichten, z.B. im Hinblick auf SNR oder Auflösung, auch die Bewegungsfelder in verschiedenen Skalierungsschichten Korrelationen miteinander haben, die erfindungsgemäß durch Bereitstellen eines Bewegungsdaten-Prädiktors vorteilhaft zur Bitraten-Reduktion ausgenutzt werden. In der Implementierung kann die Prädiktion dahingehend durchgeführt werden, dass für die Erweiterungsschicht keine eigenen Bewegungsdaten berechnet werden, sondern die Bewegungsdaten der Basisschicht gegebenenfalls nach einer Hochtastung übernommen werden. Dies kann zwar dazu führen, dass das Bewegungs-Kompensations-Restsignal in der Erweiterungsschicht größer wird als in dem Fall, in dem Bewegungsdaten für die Erweiterungsschicht extra berechnet werden. Dieser Nachteil fällt jedoch dann nicht ins Gewicht, wenn die Einsparung aufgrund der für die Erweitungsschicht bei der Übertragung eingesparten Bewegungsdaten größer ist als der durch möglicherweise größere Restwerte bedingte Bitratenanstieg.

In der Implementierung kann jedoch auch für die Erweiterungsschicht ein eigenes Bewegungsfeld berechnet werden, wobei das Bewegungsfeld der Basisschicht in die Berechnung integriert wird oder als Prädiktor verwendet wird, um nur Bewegungsfeld-Restwerte zu übertragen. Diese Implementierung hat den Vorteil, dass die Bewegungsdaten-Korrelation der beiden Skalierungsschichten voll ausgenutzt wird und dass auch die Restwerte der Bewegungsdaten nach der Bewegungsdaten-Prädiktion so klein wie möglich sind. Nachteilig an diesem Konzept ist jedoch die Tatsache, dass zusätzliche Bewegungsdaten-Restwerte übertragen werden müssen.

In dem bevorzugten Ausführungsbeispiel der vorliegenden Erfindung wird zusätzlich eine SNR-Skalierbarkeit eingesetzt. Dies bedeutet, dass in der Basisschicht mit einem gröberen Quantisierungs-Parameter quantisiert wird als in der Erweiterungsschicht. Die mit der gröberen Quantisierer-Schrittweite quantisierten und wieder rekonstruierten Restwerte der Basis-Bewegungs-Prädiktion werden hierbei als Prädiktionssignale für den Zwischen-Schicht-Prädiktor verwendet. Im Fall einer reinen SNR-Skalierbarkeit kann es genügen, für alle Skalierungsschichten auf Encodiererseite ein einziges Bewegungsfeld zu berechnen. Bezogen auf die Bewegungsdaten der Erweiterungsschicht bedeutet dies wiederum, dass keine weiteren Erweiterungs-Bewegungsdaten übertragen werden müssen, sondern dass die Erweiterungs-Bewegungsdaten aus der Basisschicht voll und ganz auf die Codiererseite zur inversen Bewegungskompensation für die Erweiterungsschicht eingesetzt werden können. Allerdings ergeben unterschiedliche Quantisierungsparameter auch unterschiedliche Bewegungsfelder, wenn eine Berechnung der Bewegungsdaten eingesetzt wird, in die der Quantisierungsparameter eingeht.

Wird eine räumliche Skalierbarkeit eingesetzt, also hat die Basis-Skalierungsschicht eine gröbere räumliche Auflösung als die Erweiterungs-Skalierungsschicht, so wird es bevorzugt, die Restwerte der Basis-Bewegungs-Prädiktion zu interpolieren, also von der niedrigen räumlichen Auflösung auf die höhere räumliche Auflösung der Erweiterungs-Skalierungsschicht umzusetzen und dann dem Zwischen-Schicht-Prädiktor zuzuführen.

Ferner wird es bevorzugt, für jede Skalierungsschicht eine eigene Berechnung der Bewegungsinformationen durchzuführen. Zur Datenraten-Reduktion wird in diesem Fall jedoch bei einem bevorzugten Ausführungsbeispiel der vorliegenden Erfindung eine Bewegungsdaten-Prädiktion vorgenommen, die wiederum entweder in der kompletten Übernahme der Bewegungsdaten der niedrigeren Skalierungsschicht bestehen kann (nach einer Skalierung), oder die darin bestehen kann, die hochgetasteten Bewegungsvektoren der niedrigeren Skalierungsschicht zur Prädiktion der Bewegungsvektoren der höheren Skalierungsschicht zu verwenden, um dann nur die Bewegungsdaten-Restwerte zu übertragen, die eine geringere Datenrate benötigen werden als nicht-prädizierte Bewegungsdaten. In diesem Fall wird es bevorzugt, sowohl den Zwischen-Schicht-Prädiktor als auch einen Erweiterungs-Bewegungsdaten-Prädiktor adaptiv auszulegen.

Bei einem bevorzugten Ausführungsbeispiel der vorliegenden Erfindung wird eine kombinierte Skalierbarkeit eingesetzt, dahingehend, dass sich die Basis-Skalierungsschicht und die Erweiterungs-Skalierungsschicht sowohl in räumlicher Auflösung als auch in dem verwendeten Quantisierungs-Parameter, also der verwendeten Quantisierer-Schrittweite unterscheiden. In diesem Fall wird ausgehend z. B. von einem vorgegebenen Quantisierungsparameter für die Basis-Skalierungsschicht aufgrund einer Lagrange-Optimierung eine Kombination aus Quantisierungs-Parameter für die Basis-schicht, Verzerrung und Bitbedarf für die Bewegungsdaten für die Basisschicht berechnet. Die nach einer bewegungs-kompensierten Prädiktion erhaltenen Restwerte und die hierbei verwendeten Basis-Bewegungsdaten werden dann zur Prädiktion der entsprechenden Daten einer höheren Skalierungsschicht verwendet, in der wiederum ausgehend von einem feineren Skalierungsparameter für die höhere Skalierungsschicht eine optimale Kombination aus Bitbedarf für die Bewegungsdaten, Quantisierungs-Parameter und Verzerrung Erweiterungs-Bewegungsdaten berechnet werden können.

Bevorzugte Ausführungsbeispiele der vorliegenden Erfindung werden nachfolgend bezugnehmend auf die beiliegenden Zeichnungen detailliert erläutert. Es zeigen:

Fig. 1a    ein bevorzugtes Ausführungsbeispiel eines erfindungsgemäßen Encodierers;

Fig. 1b    eine detailliertere Darstellung eines Basis-Bildcodierers von Fig. 1a;

Fig. 1c    eine Erläuterung der Funktionalität einer Zwischen-Schicht-Prädiktions-Flag;

Fig. 1d    eine Beschreibung einer Bewegungsdaten-Flag;

Fig. 1e    eine bevorzugte Implementierung des Erweiterungs-Bewegungskompensierers 1014 von Fig. 1a;

Fig. 1f    eine bevorzugte Implementierung des Erweiterungs-Bewegungsdatenermittlers 1078 von Fig. 2;

Fig. 1g    eine Übersichtsdarstellung von drei bevorzugten Ausführungsformen zur Berechnung der Erweiterungs-Bewegungsdaten und zur Erweiterungs-Bewegungsdaten-Verarbeitung zu Zwecken der Signalisierung und ggf. Restdatenübertragung;

Fig. 2    ein bevorzugtes Ausführungsbeispiel eines erfindungsgemäßen Decodierers;

Fig. 3    ein Blockschaltbild eines Decodierers mit vier Ebenen;

Fig. 4    ein Blockschaltbild zur Veranschaulichung der Lifting-Zerlegung einer zeitlichen Subband-Filterbank;

Fig. 5a    eine Darstellung der Funktionalität des in Fig. 4 gezeigten Lifting-Schemas;

Fig. 5b    eine Darstellung von zwei bevorzugten Lifting-Vorschriften mit unidirektionaler Prädiktion (Haar-Wavelet) und bidirektionaler Prädiktion (5/3-Transformation);

Fig. 5c    eine bevorzugte Ausführungsform der Prädiktions- und Aktualisierungs-Operatoren mit Bewegungskompensation und Referenzindizes zur beliebigen Wahl der zwei durch das Liftung-Schema zu verarbeitenden Bilder;

Fig. 5d    eine Darstellung des Intramodus, bei dem ursprüngliche Bildinformationen Makroblock-weise in Hochpassbilder eintragbar sind;

Fig. 6a    eine schematische Darstellung zur Signalisierung eines Makroblock-Modus;

Fig. 6b    eine schematische Darstellung zur Hochtastung von Bewegungsdaten bei einer räumlichen Skalierbarkeit gemäß einem bevorzugten Ausführungsbeispiel der vorliegenden Erfindung;

Fig. 6c    eine schematische Darstellung der Datenstrom-Syntax für Bewegungsvektor-Differenzen;

Fig. 6d    eine schematische Darstellung einer Restwerte-Syntax-Erweiterung gemäß einem bevorzugten Ausführungsbeispiel der vorliegenden Erfindung;

Fig. 7     ein Übersichtsdiagramm zur Veranschaulichung der zeitlichen Verlegung einer Gruppe von beispielsweise 8 Bildern;

Fig. 8     eine bevorzugte zeitliche Plazierung von Tiefpass-Bildern für eine Gruppe von 16 Bildern;

Fig. 9     ein Übersichts-Blockschaltbild zur Veranschaulichung der grundsätzlichen Codierstruktur für einen Codierer gemäß dem Standard H.264/AVC für einen Makroblock;

Fig. 10    eine Kontext-Anordnung, die aus zwei benachbarten Pixelelementen A und B links bzw. oberhalb eines gegenwärtigen Syntaxelements C besteht; und

Fig. 11    eine Darstellung der Aufteilung eines Bildes in Slices.

Fig. 1a zeigt ein bevorzugtes Ausführungsbeispiel einer Vorrichtung zum Erzeugen einer codierten Videosequenz, die eine Basis-Skalierungsschicht und eine Erweiterungs-Skalierungsschicht aufweist. Eine ursprüngliche Videosequenz mit einer Gruppe von 8, 16 oder einer anderen Anzahl von Bildern wird über einen Eingang 1000 eingespeist. Ausgangsseitig enthält die codierte Videosequenz die Basis-Skalierungsschicht 1002 und die Erweiterungs-Skalierungsschicht 1004. Die Erweiterungs-Skalierungsschicht 1004 und die Basis-Skalierungsschicht 1002 können einem Bitstrom-Multiplexer zugeführt werden, der ausgangsseitig einen einzigen skalierbaren Bitstrom erzeugt. Eine getrennte Übertragung der beiden Skalierungsschichten ist jedoch je nach Implementierung ebenfalls möglich und in bestimmten Fällen sinnvoll. Fig. 1a zeigt einen Codierer zum Erzeugen von zwei Skalierungsschichten, also der Basis-Skalierungsschicht und einer Erweiterungs-Skalierungsschicht. Um einen Codierer zu erhalten, der gegebenenfalls eine oder mehrere weitere Erweiterungsschichten erzeugt, ist die Funktionalität der Erweiterungs-Skalierungsschicht zu wiederholen, wobei eine höhere Erweiterungs-Skalierungsschicht immer von der nächstniedrigeren Erweiterungs-Skalierungsschicht so mit Daten versorgt wird, wie in Fig. 1 die gezeigte Erweiterungs-Skalierungsschicht 1004 von der Basis-Skalierungsschicht 1002 mit Daten versorgt wird.

Bevor auf verschiedene Skalierungsarten speziell eingegangen wird, wie beispielsweise eine SNR-Skalierbarkeit oder eine räumliche Skalierbarkeit oder eine kombinierte Skalierbarkeit aus räumlicher und SNR-Skalierbarkeit, sei zunächst das allgemeine Prinzip der vorliegenden Erfindung dargestellt. Zunächst umfasst der Encodierer einen Basis-Bewegungs-Kompensierer oder Basis-Bewegungs-Schätzer 1006 zum Berechnen von Basis-Bewegungsdaten, die angeben, wie sich ein Makroblock in einem aktuellen Bild bezüglich eines anderen Bilds in einer Gruppe von Bildern, die der Basis-Bewegungs-Kompensierer 1006 eingangsseitig erhält, bewegt hat. Techniken zum Berechnen von Bewegungsdaten, insbesondere zum Berechnen eines Bewegungsvektors für einen Makroblock, der prinzipiell ein Bereich von Pixeln in einem digitalen Videobild ist, sind bekannt. Vorzugsweise wird die Bewegungs-Kompensationsberechnung eingesetzt, wie sie im Video-Codierstandard H.264/AVC standardisiert ist. Hierbei wird ein Makroblock eines späteren Bildes betrachtet und ermittelt, wie sich der Makroblock im Vergleich zu einem früheren Bild "bewegt" hat. Diese Bewegung (in xy-Richtung) wird durch einen zweidimensionalen Bewegungsvektor angegeben, der vom Block 1006 für jeden Makroblock berechnet und über eine Bewegungsdaten-Leitung 1008 einem Basis-Bildcodierer 1010 zugeführt wird. Hierauf wird für das nächste Bild berechnet, wie sich ein Makroblock vom vorherigen Bild zum nächsten Bild bewegt hat.

In einer Implementierung kann man diesen neuen Bewegungsvektor, der gewissermaßen die Bewegung vom zweiten zum dritten Bild angibt, wieder als zweidimensionalen Vektor übertragen. Aus Effizienzgründen wird es jedoch bevorzugt, nur eine Bewegungsvektor-Differenz zu übertragen, also die Differenz aus dem Bewegungsvektor eines Makroblocks vom zweiten zum dritten Bild und dem Bewegungsvektor des Makroblocks vom ersten zum zweiten Bild. Alternative Referenzierungen bzw. Bewegungsvektor-Differenzen zu nicht unmittelbar vorausgehenden Bildern, sondern zu weiteren vorausgehenden Bildern sind ebenfalls verwendbar.

Die Bewegungsdaten, die vom Block 1006 berechnet worden sind, werden dann einem Basis-Bewegungs-Prädiktor 1012 zugeführt, der ausgebildet ist, um eine Basis-Folge von Restfehlerbildern zur Verwendung der Bewegungsdaten und der Gruppe von Bildern zu berechnen. Der Basis-Bewegungs-Prädiktor führt somit die Bewegungskompensation durch, die vom Bewegungskompensierer bzw. Bewegungs-Schätzer gewissermaßen vorbereitet worden ist. Diese Basis-Folge von Restfehlerbildern wird dann dem Basis-Bildcodierer zugeführt. Der Basis-Bildcodierer ist ausgebildet, um die Basis-Skalierungsschicht 1002 an seinem Ausgang zu liefern.

Der erfindungsgemäße Encodierer umfasst ferner einen Erweiterungs-Bewegungs-Kompensierer oder Erweiterungs-Bewegungs-Schätzer 1014 zum Ermitteln von Erweiterungs-Bewegungsdaten. Diese Erweiterungs-Bewegungsdaten werden dann einem Erweiterungs-Bewegungs-Prädiktor 1016 zugeführt, der ausgangsseitig eine Erweiterungsfolge von Restfehlerbildern erzeugt und einem nachgeschalteten Zwischen-Schicht-Prädiktor 1018 zuführt. Der Erweiterungs-Bewegungs-Prädiktor führt somit die Bewegungskompensation durch, die vom Bewegungskompensierer bzw. Bewegungs-Schätzer gewissermaßen vorbereitet worden ist.

Der Zwischen-Schicht-Prädiktor ist ausgebildet, um ausgangsseitig Erweiterungs-Prädiktions-Restfehlerbilder zu berechnen. Je nach Implementierung verwendet der Zwischen-Schicht-Prädiktor zusätzlich zu den Daten, die er vom Block 1016 erhält, also zusätzlich zu der Erweiterungs-Folge von Restfehlerbildern die Basis-Folge von Restfehlerbildern, wie sie vom Block 1012 über eine gestrichelte Umwegleitung 1020 geliefert wird. Alternativ kann der Block 1018 jedoch auch eine interpolierte Folge von Restfehlerbildern, die am Ausgang des Blocks 1012 geliefert und durch einen Interpolator 1022 interpoliert wird, verwenden. Wieder alternativ kann der Zwischen-Schicht-Prädiktor auch eine rekonstruierte Basis-Folge von Restfehlerbildern liefern, wie sie an einem Ausgang 1024 vom Basis-Bildcodierer 1010 geliefert wird. Wie es aus Fig. 1a zu sehen ist, kann diese rekonstruierte Basis-Folge von Restfehlerbildern interpoliert sein 1022 oder nicht-interpoliert sein 1020. Allgemein gesagt arbeitet der Zwischen-Schicht-Prädiktor somit unter Verwendung der Basis-Folge von Restfehlerbildern, wobei die Informationen an dem Zwischen-Schicht-Prädiktor-Eingang 1026 z. B. durch Rekonstruktion oder Interpolation von der Basis-Folge von Restfehlerbildern am Ausgang des Blocks 1012 abgeleitet sind.

Dem Zwischen-Schicht-Prädiktor 1018 nachgeschaltet ist ein Erweiterungs-Bildcodierer 1028, der ausgebildet ist, um die Erweiterungs-Prädiktions-Restfehlerbilder zu codieren, um die codierte Erweiterungs-Skalierungsschicht 1004 zu erhalten.

Bei einem bevorzugten Ausführungsbeispiel der vorliegenden Erfindung ist der Zwischen-Schicht-Prädiktor ausgebildet, um Makroblock für Makroblock und Bild für Bild das Signal an seinem Eingang 1026 von dem entsprechenden Signal, das der Zwischen-Schicht-Prädiktor 1018 von dem Erweiterungs-Bewegungs-Prädiktor 1016 erhält, zu subtrahieren. Das bei dieser Subtraktion erhaltene Ergebnissignal stellt dann einen Makroblock eines Bildes der Erweiterungs-Prädiktions-Restfehlerbilder dar.

Bei einem bevorzugten Ausführungsbeispiel der vorliegenden Erfindung ist der Zwischen-Schicht-Prädiktor adaptiv ausgebildet. Für jeden Makroblock wird eine Zwischen-Schicht-Prädiktions-Flag 1030 bereitgestellt, die dem Zwischen-Schicht-Prädiktor anzeigt, dass er eine Prädiktion durchzuführen hat, oder die in ihrem anderen Zustand anzeigt, dass keine Prädiktion durchzuführen ist, sondern dass der entsprechende Makroblock am Ausgang des Erweiterungs-Bewegungs-Prädiktors 1016 ohne weitere Prädiktion dem Erweiterungs-Bildcodierer 1028 zuzuführen ist. Diese adaptive Implementierung hat den Vorteil, dass eine Zwischen-Schicht-Prädiktion nur dort durchgeführt wird, wo sie sinnvoll ist, wo also das Prädiktions-Restsignal zu einem niedrigeren Ausgangsbildrate führt, und zwar im Vergleich zu dem Fall, bei dem keine Zwischen-Schicht-Prädiktion durchgeführt worden ist, sondern bei dem unmittelbar die Ausgangsdaten des Erweiterungs-Bewegungs-Prädiktors 1016 codiert worden sind.

Im Falle einer räumlichen Skalierbarkeit ist zwischen der Erweiterungs-Skalierungsschicht und der Basis-Skalierungsschicht ein Dezimator 1032 vorgesehen, der ausgebildet ist, um die Videosequenz an seinem Eingang, die eine bestimmte räumliche Auflösung hat, auf eine Videosequenz an seinem Ausgang umzusetzen, die eine geringere Auflösung hat. Falls eine reine SNR-Skalierbarkeit vorgesehen ist, falls also die Basis-Bildcodierer 1010 und 1028 für die beiden Skalierungsschichten mit unterschiedlichen Quantisierungs-Parametern 1034 bzw. 1036 arbeiten, ist der Dezimator 1032 nicht vorgesehen. Dies wird in Fig. 1a durch die Umwegleitung 1038 schematisch dargestellt.

Im Fall der räumlichen Skalierbarkeit muss ferner der Interpolator 1022 vorgesehen sein. Im Fall einer reinen SNR-Skalierbarkeit ist der Interpolator 1022 dagegen nicht vorgesehen. An seiner Stelle wird stattdessen die Umwegleitung 1020 genommen, wie es in Fig. 1a dargestellt ist.

In einer Implementierung ist der Erweiterungs-Bewegungs-Kompensierer 1014 ausgebildet, um komplett ein eigenes Bewegungsfeld zu berechnen, oder um das durch den Basis-Bewegungs-Kompensierer 1006 berechnete Bewegungsfeld direkt (Umwegleitung 1040) oder nach einer Hochtastung durch einen Hochtaster 1042 zu verwenden. Im Fall einer räumlichen Skalierbarkeit muss der Hochtaster 1042 vorgesehen sein, um einen Bewegungsvektor der Basis-Bewegungsdaten auf die höhere Auflösung hochzutasten, also z.B. zu skalieren. Wenn beispielsweise die Erweiterungs-Auflösung doppelt so hoch und breit wie die Basis-Auflösung ist, überdeckt ein Makroblock (16x16 Luminanz-Abtastwerte) in der Erweiterungs-schicht einen Bildbereich, welcher einem Sub-Makroblock (8x8 Luminanz-Abtastwerte) in der Basisschicht entspricht.

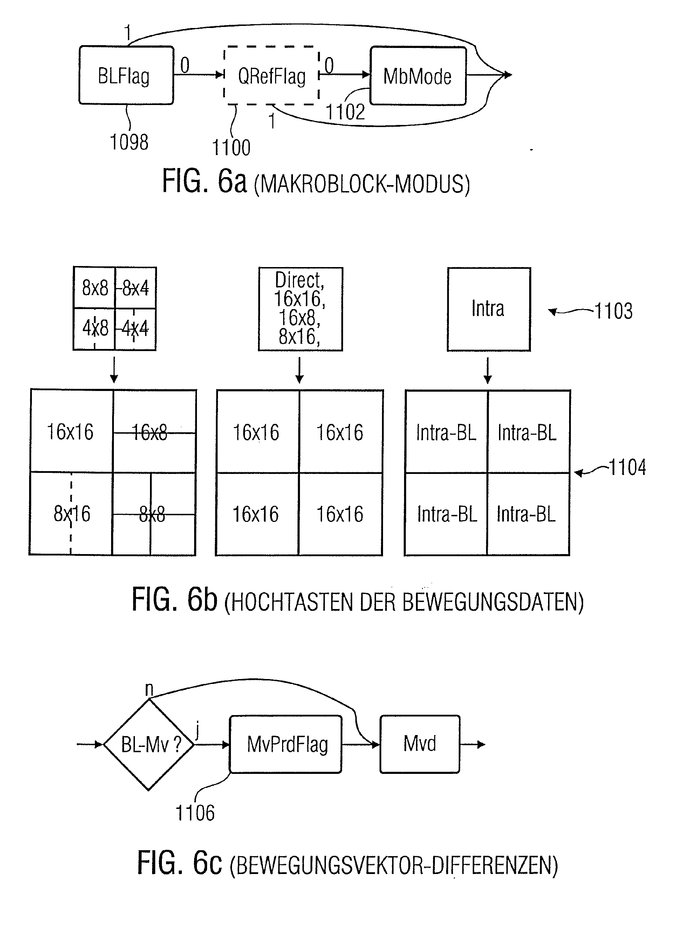

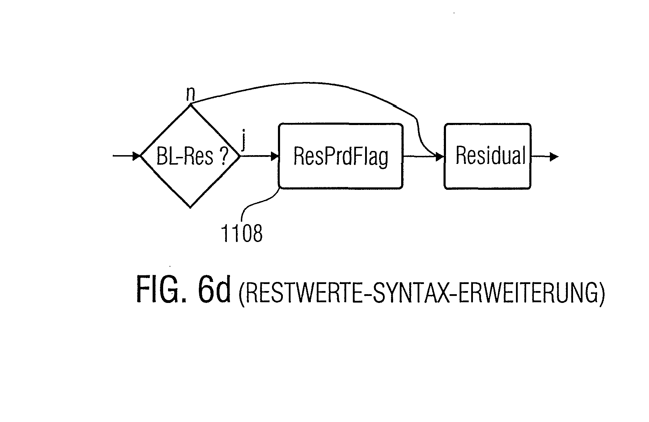

Um den Basis-Bewegungsvektor für den Makroblock der Erweiterungs-Skalierungsschicht verwenden zu können, wird der Basis-Bewegungsvektor daher in seiner x-Komponente und seiner y-Komponente verdoppelt, also mit dem Faktor 2 skaliert. Hierauf wird jedoch noch bezugnehmend auf Fig. 6b näher eingegangen.

Liegt dagegen lediglich eine SNR-Skalierbarkeit vor, so ist das Bewegungsfeld für alle Skalierungsschichten dasselbe. Es muss also nur ein einziges Mal berechnet werden und kann von jeder höheren Skalierungsschicht unmittelbar so verwendet werden, wie es von der niedrigeren Skalierungsschicht berechnet worden ist.

Zur Zwischen-Schicht-Prädiktion kann sowohl das Signal am Ausgang des Basis-Bewegungs-Prädiktors 1012 verwendet werden. Alternativ kann jedoch auch das rekonstruierte Signal auf der Leitung 1024 verwendet werden. Die Auswahl, welches dieser beiden Signale zur Prädiktion verwendet wird, wird durch einen Schalter 1044 vorgenommen. Das Signal auf der Leitung 1024 unterscheidet sich vom Signal am Ausgang des Blocks 1012 dadurch, dass es bereits eine Quantisierung erlebt hat. Dies bedeutet, dass das Signal auf der Leitung 1024 im Vergleich zum Signal am Ausgang des Blocks 1012 einen Quantisierungsfehler hat. Die Alternative der Verwendung des Signals auf der Leitung 1024 zur Zwischen-Schicht-Prädiktion ist insbesondere dann von Vorteil, wenn eine SNR-Skalierbarkeit entweder allein oder in Verbindung mit einer räumlichen Skalierbarkeit eingesetzt wird, da dann der durch den Basis-Bildcodierer 1010 vorgenommene Quantisierungsfehler gewissermaßen in die höhere Skalierungsschicht "mitgenommen" wird, da das Ausgangssignal am Block 1018 dann den von der ersten Skalierungsschicht gemachten Quantisierungsfehler enthält, der dann durch den Erweiterungs-Bildcodierer mit einer typischerweise feineren Quantisierer-Schrittweite bzw. einem veränderten Quantisierungs-Parameter 2 am Eingang 1036 quantisiert und in die Erweiterungs-Skalierungsschicht 1004 geschrieben wird.

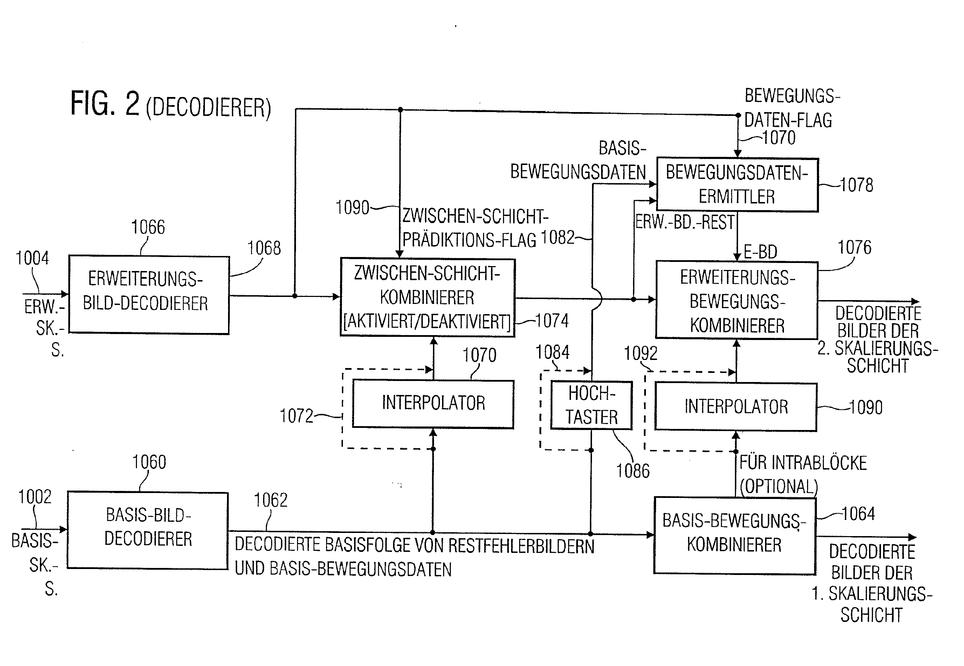

Analog zur Zwischen-Schicht-Prädiktions-Flag 1030 wird auch eine Bewegungsdaten-Flag 1048 in den Bild-Codierer eingespeist, damit eine entsprechende Information hierüber in der Erweiterungs-Skalierungsschicht 1004 enthalten ist, um dann vom Decodierer, auf den bezugnehmend auf Fig. 2 eingegangen wird, verwendet zu werden.

Wird eine reine räumliche Skalierbarkeit verwendet, so kann statt des Signals auf der Leitung 1024, also statt der rekonstruierten Folge von Basis-Restfehlerbildern auch das Ausgangssignal des Basis-Bewegungs-Prädiktors 1012, also die Basis-Folge von Restfehlerbildern eingesetzt werden.

Die Steuerung dieses Schalters kann je nach Implementierung manuell oder aufgrund einer Prädiktions-Nutzenfunktion erfolgen.

An dieser Stelle sei darauf hingewiesen, dass vorzugsweise sämtliche Prädiktionen, also die Bewegungs-Prädiktion, die Erweiterungs-Bewegungsdaten-Prädiktion und die Zwischen-Schicht-Restwerteprädiktion adaptiv ausgeführt sind. Dies bedeutet, dass nicht unbedingt für jeden Makroblock oder Sub-Makroblock in einem Bild der Basis-Folge von Restfehlerbildern beispielsweise tatsächlich auch Bewegungsdaten-Prädiktions-Restwerte vorhanden sein müssen. So kann ein Bild der Basis-Folge von Restfehlerbildern trotz der Tatsache, dass es als "Restfehlerbild" bezeichnet wird, auch nicht-prädizierte Makroblöcke bzw. Sub-Makroblöcke enthalten. Diese Situation wird dann auftreten, wenn sich herausgestellt hat, dass in einem Bild z. B. ein neues Objekt auftritt. Hier würde eine bewegungskompensierte Prädiktion keinen Sinn machen, da das Prädiktions-Restsignal größer werden würde als das ursprüngliche Signal im Bild. Bei der Erweiterungs-Bewegungs-Prädiktion im Block 1016 würde in einem solchen Fall somit sowohl der Prädiktionsoperator als auch ggf. der Aktualisierungsoperator für diesen Block (z. B. Makroblock oder Sub-Makroblock) deaktiviert sein.

Dennoch wird aus Übersichtlichkeitsgründen z. B. von einer Basis-Folge von Restfehlerbildern gesprochen, obgleich vielleicht nur ein einziges Restfehlerbild der Basis-Folge von Restfehlerbildern einen einzigen Block aufweist, in dem tatsächlich Bewegungs-Prädiktions-Restsignale enthalten sind. In typischen Anwendungsfällen wird jedoch jedes Restfehlerbild tatsächlich eine hohe Anzahl von Blöcken mit Bewegungs-Prädiktions-Restdaten haben.

Im Sinne der vorliegenden Erfindung trifft dies auch für die Erweiterungs-Folge von Restfehlerbildern zu. So wird diese Situation in der Erweiterungs-Schicht ähnlich zur Situation in der Basis-Schicht sein. Im Sinne der vorliegenden Erfindung ist daher eine Erweiterungs-Folge von Restfehlerbildern bereits eine Folge von Bildern, in denen im Extremfall nur ein einziger Block eines einzigen "Restfehlerbildes" Bewegungs-Prädiktions-Restwerte hat, während in allen anderen Blöcken dieses Bildes und sogar in allen anderen "Restfehlerbildern" eigentlich gar keine Restfehler stehen, da für alle diese Bilder/Blöcke die bewegungskompensierte Prädiktion und ggf. die bewegungskompensierte Aktualisierung deaktiviert worden sind.

Im Sinne der vorliegenden Erfindung gilt dies auch für den Zwischen-Schicht-Prädiktor, der Erweiterungs-Prädiktions-Restfehlerbilder berechnet. Typischerweise werden die Erweiterungs-Prädiktions-Restfehlerbilder in einer Folge vorliegen. Jedoch ist auch der Zwischen-Schicht-Prädiktor vorzugsweise adaptiv ausgestaltet. Wenn sich z. B. herausgestellt hat, dass nur für einen einzigen Block eines einzigen "Restfehlerbildes" eine Restdaten-Prädiktion von der Basisschicht zur Erweiterungsschicht sinnvoll war, während für alle anderen Blöcke dieses Bildes und ggf. sogar für alle anderen Bilder der Folge von Erweiterungs-Prädiktions-Restfehlerbildern die Zwischen-Schicht-Restdatenprädiktion deaktiviert worden ist, wird aus Übersichtlichkeitsgründen im vorliegenden Kontext diese Folge dennoch als Erweiterungs-Prädiktions-restfehlerbilder bezeichnet. In diesem Zusammenhang sei darauf hingewiesen, dass der Zwischen-Schicht-Prädiktor nur Restdaten prädizieren kann, wenn in einem entsprechenden Block eines Restfehlerbildes in der Basisschicht bereits Bewegungskompensations-Restwerte berechnet worden sind, und wenn für einen diesem Block entsprechenden Block (z. B. an der gleichen x, y-Position) in einem Restfehlerbild der Erweiterungs-Folge ebenfalls eine bewegungskompensierte Prädiktion vorgenommen worden ist, so dass in diesem Block Restfehlerwerte aufgrund einer bewegungskompensierten Prädiktion in der Erweiterungsschicht stehen. Nur dann, wenn in beiden zu betrachtenden Blöcken tatsächliche Bewegungskompensations-Prädiktions-Restwerte bestehen, wird der Zwischen-Schicht-Prädiktor vorzugsweise aktiv werden, um einen Block von Restfehlerwerten in einem Bild der Basisschicht als Prädiktor für einen Block von Restfehlerwerten in einem Bild der Erweiterungsschicht zu verwenden und dann nur die Restwerte dieser Prädiktion, also Erweiterungs-Prädiktions-Restfehlerdaten in diesem Block des betrachteten Bildes zum Erweiterungsbildcodierer zu übertragen.

Nachfolgend wird bezugnehmend auf Fig. 1b auf eine detailliertere Darstellung des Basis-Bildcodierers 1010 oder des Erweiterungs-Bildcodierers 1028 bzw. eines beliebigen Bild-codierers eingegangen. Eingangsseitig empfängt der Bildcodierer die Gruppe von Restfehlerbildern und führt sie makroblockweise einer Transformation 1050 zu. Die transformierten Makroblöcke werden dann in einem Block 1052 skaliert und unter Verwendung eines Quantisierungsparameters 1034, 1036, ... quantisiert. Am Ausgang des Blocks 1052 werden dann der verwendete Quantisierungs-Parameter, also die verwendete Quantisierungs-Schrittweite für einen Makroblock sowie Quantisierungs-Indizes für die Spektralwerte des Makroblocks ausgegeben. Diese Informationen werden dann einer in Fig. 1b nicht gezeigten Entropie-Codierstufe zugeführt, die einen Huffman-Codierer oder vorzugsweise einen arithmetischen Codierer umfasst, der gemäß H.264/AVC nach dem bekannten CABAC-Konzept arbeitet. Das Ausgangssignal der Einrichtung 1052 wird jedoch ebenfalls einem Block 1054 zugeführt, der eine inverse Skalierung und Requantisierung durchführt, um die Quantisierungs-Indizes zusammen mit dem Quantisierungs-Parameter wieder in Zahlenwerte umzurechnen, die dann einer inversen Transformation in einem Block 1056 zugeführt werden, um eine rekonstruierte Gruppe von Restfehlerbildern zu erhalten, die nunmehr im Vergleich zur ursprünglichen Gruppe von Restfehlerbildern am Eingang des Transformationsblocks 1050 einen Quantisierungsfehler hat, der von den Quantisierungs-Parametern bzw. der Quantisierungs-Schrittweite abhängt. Je nach Steuerung des Schalters 1044 wird nunmehr entweder das eine Signal oder das andere Signal dem Interpolator 1022 oder bereits dem Zwischen-Schicht-Prädiktor 1018 zugeführt, um die erfindungsgemäße Restwert-Prädiktion durchzuführen.

In Fig. 1c ist eine einfache Implementierung der Zwischen-Schicht-Prädiktions-Flag 1030 dargestellt. Ist die Zwischen-Schicht-Prädiktions-Flag gesetzt, so ist der Zwischen-Schicht-Prädiktor 1018 aktiviert. Ist die Flag dagegen nicht gesetzt, so ist der Zwischen-Schicht-Prädiktor deaktiviert, so dass ein Simulcast-Betrieb für diesen Makroblock oder einen diesem Makroblock untergeordneten Sub-Makroblock ausgeführt wird. Grund hierfür könnte sein, dass der Codiergewinn durch die Prädiktion eigentlich ein Codierverlust ist, dass also eine Übertragung des entsprechenden Makroblocks am Ausgang des Blocks 1016 einen besseren Codiergewinn bei der nachfolgenden Entropie-Codierung liefert als wenn Prädiktions-Restwerte verwendet werden würden.

Eine einfache Implementierung der Bewegungsdaten-Flag 1048 ist in Fig. 1d gezeigt. Ist die Flag gesetzt, so werden Bewegungsdaten der Erweiterungsschicht aus hochgetasteten Bewegungsdaten der Basisschicht abgeleitet. Im Fall einer SNR-Skalierbarkeit ist der Hochtaster 1042 nicht nötig. Hier können bei gesetzter Flag 1048 die Bewegungsdaten der Erweiterungsschicht direkt aus den Basis-Bewegungsdaten abgeleitet werden. Es sei darauf hingewiesen, dass diese Bewegungsdaten-"Ableitung" in der direkten Übernahme der Bewegungsdaten bestehen kann, oder aber in einer echten Prädiktion, bei der Block 1014 die von der Basis-Schicht erhaltenen Bewegungsvektoren von entsprechenden von dem Block 1014 berechneten Bewegungsvektoren für die Erweiterungs-Skalierungsschicht z.B. subtrahiert, um Bewegungsdaten-Prädiktionswerte zu erhalten. Die Bewegungsdaten der Erweiterungs-Schicht (falls keine Prädiktion irgendwelcher Art vorgenommen worden ist), oder die Restwerte der Prädiktion (falls eine echte Prädiktion vorgenommen worden ist) werden über einen in Fig. 1a gezeigten Ausgang zum Erweiterungs-Bildcodierer 1028 geliefert, damit sie am Ende in dem Erweiterungs-Skalierungsschicht-Bitstrom 1004 enthalten sind. Wird dagegen eine komplette Übernahme der Bewegungsdaten von der Basis-Skalierungsschicht mit oder ohne Skalierung vorgenommen, so müssen keine Erweiterungs-Bewegungsdaten in den Erweiterungs-Skalierungsschicht-Bitstrom 1004 geschrieben werden. Es genügt lediglich, diese Tatsache durch die Bewegungsdaten-Flag 1048 im Erweiterungs-Skalierungsschicht-Bitstrom zu signalisieren.

Fig. 2 zeigt eine Vorrichtung zum Decodieren einer codierten Videosequenz, die die Basis-Skalierungsschicht 1002 und die Erweiterungs-Skalierungsschicht 1004 umfasst. Die Erweiterungs-Skalierungsschicht 1004 und die Basis-Skalierungsschicht 1002 können von einem Bitstrom-Demultiplexer stammen, der einen skalierbaren Bitstrom mit beiden Skalierungsschichten entsprechend demultiplext, um sowohl die Basis-Skalierungsschicht 1002, als auch die Erweiterungs-Skalierungsschicht 1004 aus dem gemeinsamen Bitstrom zu extrahieren. Die Basis-Skalierungsschicht 1002 wird einem Basis-Bild-Decodierer 1060 zugeführt, der ausgebildet ist, um die Basis-Skalierungsschicht zu decodieren, um eine decodierte Basis-Folge von Restfehlerbildern und um Basis-Bewegungsdaten zu erhalten, die an einer Ausgangsleitung 1062 anliegen. Die Ausgangssignale an der Leitung 1062 werden dann einem Basis-Bewegungs-Kombinierer 1064 zugeführt, der die im Encodierer in dem Block 1012 eingeführte Basis-Bewegungsprädiktion wieder rückgängig macht, um ausgangsseitig decodierte Bilder der ersten Skalierungsschicht auszugeben. Der erfindungsgemäße Decodierer umfasst ferner einen Erweiterungs-Bild-Decodierer 1066 zum Decodieren der Erweiterungs-Skalierungsschicht 1004, um Erweiterungs-Prädiktions-Restfehlerbilder an einer Ausgangsleitung 1068 zu erhalten. Die Ausgangsleitung 1068 umfasst ferner Bewegungsdaten-Infomationen, wie beispielsweise die Bewegungsdaten-Flag 1070 oder, falls tatsächlich Erweiterungs-Bewegungsdaten oder Erweiterungs-Bewegungsdaten-Restwerte in der Erweiterungs-Skalierungsschicht 1004 waren, diese Erweiterungs-Bewegungsdaten. Die decodierte Basis-Folge auf der Leitung 1062 wird nunmehr entweder durch einen Interpolator 1070 interpoliert oder unverändert (Leitung 1072) einem Zwischen-Schicht-Kombinierer 1074 zugeführt, um die vom Zwischen-Schicht-Prädiktor 1018 von Fig. 1a vorgenommene Zwischen-Schicht-Prädiktion wieder rückgängig zu machen. Der Zwischen-Schicht-Kombinierer ist also ausgebildet, um die Erweiterungs-Prädiktions-Restfehlerbilder mit Informationen über die decodierte Basis-Folge auf der Leitung 1062, seien sie interpoliert (1070) oder nicht (1072), zu kombinieren, um eine Erweiterungs-Folge von Restfehlerbildern zu erhalten, die schließlich einem Erweiterungs-Bewegungs-Kombinierer 1076 zugeführt wird, der ebenso wie der Basis-Bewegungs-Kombinierer 1064 die auch in der Erweiterungsschicht vorgenommene Bewegungs-Kompensation rückgängig macht. Der Erweiterungs-Bewegungs-Kombinierer 1076 ist mit einem Bewegungsdatenermittler 1078 gekoppelt, um für die Bewegungs-Kombination im Block 1076 die Bewegungsdaten zu liefern. Die Bewegungsdaten können tatsächlich vom Erweiterungs-Bild-Decodierer am Ausgang 1068 gelieferte volle Erweiterungs-Bewegungsdaten für die Erweiterungs-schicht sein. Alternativ können die Erweiterungs-Bewegungsdaten auch Bewegungsdaten-Restwerte sein. In beiden Fällen werden die entsprechenden Daten über eine Erweiterungs-Bewegungsdaten-Leitung 1080 dem Bewegungsdaten-Ermittler 1078 zugeführt. Signalisiert die Bewegungsdaten-Flag 1070 jedoch, dass für die Erweiterungs-Schicht keine eigenen Erweiterungs-Bewegungsdaten übertragen worden sind, so werden notwendige Bewegungsdaten über eine Leitung 1082 von der Basis-Schicht geholt, und zwar je nach verwendeter Skalierbarkeit, entweder direkt (Leitung 1084) oder nach einer Hochtastung durch einen Hochtaster 1086.

Im Fall einer Zwischen-Schicht-Prädiktion von INTRA-Blöcken, also keinen Bewegungsdaten-Restwerten, ist auf Decodiererseite ferner eine entsprechende Verbindung zwischen dem Erweiterungs-Bewegungs-Kombinierer 1076 und dem Basis-Bewegungs-Kombinierer 1064 vorgesehen, die je nach räumlicher Skalierbarkeit einen Interpolator 1090 aufweist oder eine Umweg-Leitung, wenn nur eine SNR-Skalierbarkeit eingesetzt worden ist. Im Fall einer optionalen Intrablock-Prädiktion zwischen zwei Schichten wird der Erweiterungs-schicht für diesen Intra-Makroblock lediglich ein Prädiktions-Restsignal übertragen, was durch entsprechende Signalisierungsinformationen im Bitstrom bekannt gegeben wird. In diesem Fall wird der Erweiterungs-Bewegungs-Komprimierer zusätzlich zu der nachfolgend noch dargelegten Funktionalität auch für diesen einen Makroblock eine Summenbildung, also eine Kombination zwischen den Makroblock-Restwerten und den Makroblock-Werten aus der niedrigeren Skalierungsschicht durchführen und dann den erhaltenen Makroblock der eigentlichen inversen Bewegungs-Kompensations-Verarbeitung zuzuführen.

Nachfolgend wird bezugnehmend auf die Figuren 3 bis 5d auf eine bevorzugte Ausführungsform des Basis-Bewegungs-Prädiktors 1012 oder des Erweiterungs-Bewegungs-Prädiktors 1016 bzw. des inversen Elements, also des Erweiterungs-Bewegungs-Kombinierers 1076 oder des Basis-Bewegungs-Kompensierers 1064 eingegangen.

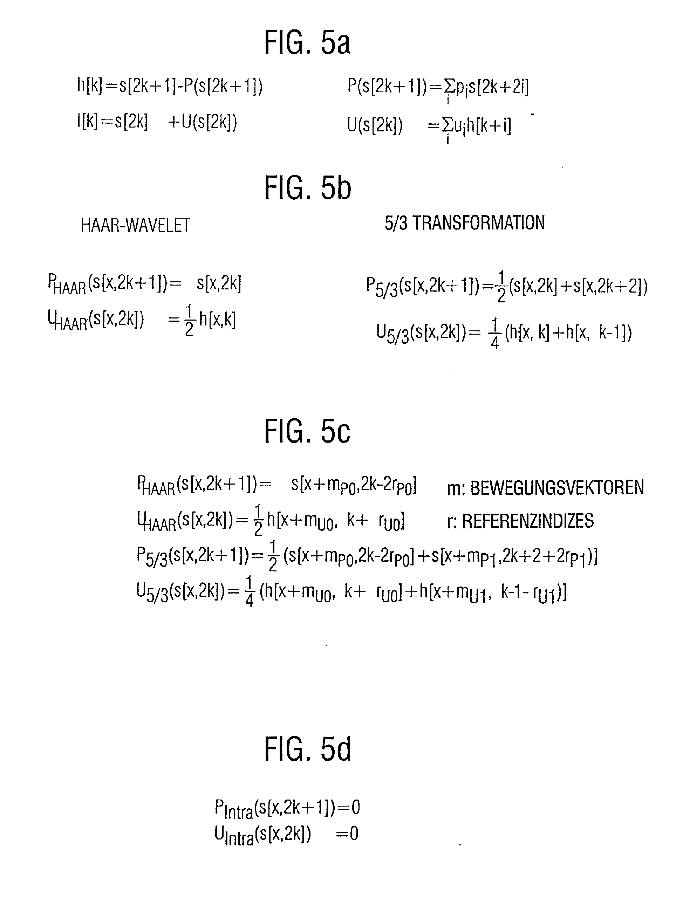

Prinzipiell kann jeder Bewegungs-Kompensations-Prädiktions-Algorithmus eingesetzt werden, also auch der Bewegungs-Kompensations-Algorithmus, der bei 92 in Fig. 9 dargestellt worden ist. So gehorcht der konventionelle Bewegungs-Kompensations-Algorithmus ebenfalls der in Fig. gezeigten Systematik, wobei jedoch der Aktualisierungs-Operator U, der in Fig. 4 mit dem Bezugszeichen 45 dargestellt ist, deaktiviert ist. Dies führt dazu, dass eine Gruppe von Bildern in ein Ursprungsbild und davon gewissermaßen abhängige Restbilder bzw. Prädiktions-Restsignale oder Restfehlerbilder umgewandelt wird. Wird jedoch in dem bekannten Bewegungs-Kompensationsschema eine Erweiterung dahingehend implementiert, dass der Aktualisierungs-Operator, wie es in Fig. 4 dargestellt ist, aktiv ist und z.B. so berechnet wird, wie es anhand der Figuren 5a bis 5d dargestellt ist, so wird aus der normalen Bewegungs-Kompensations-Prädiktions-Berechnung die sogenannte MCTF-Verarbeitung, die auch als Bewegungs-kompensiertes zeitliches Filtern bezeichnet wird. Hierbei wird durch die Aktualisierungs-Operation aus dem normalen Bild bzw. INTRA-Bild der konventionellen Bewegungskompensation ein Tiefpass-Bild, da das ursprüngliche Bild durch das mit dem Aktualisierungs-Operator gewichtete Prädiktions-Restsignal kombiniert wird.

Bei dem bevorzugten Ausführungsbeispiels der vorliegenden Erfindung wird, wie es bereits anhand der Figuren 1a und 2 beschrieben worden ist, eine solche MTCF-Verarbeitung für jede Skalierungsschicht durchgeführt, wobei die MCTF-Verarbeitung vorzugsweise derart stattfindet, wie es anhand der Figuren 3 bis 5d und 7 bis 8 beschrieben ist.

Nachfolgend wird Bezug nehmend auf die Fig. 4 und die nachfolgenden Figuren 5a-5d auf die bevorzugte Ausführungsform des bewegungskompensierten Prädiktionsfilters eingegangen. Wie es bereits ausgeführt worden ist, besteht das bewegungskompensierte zeitliche Filter (MCTF; MCTF = motioncompensated temporal Filter) aus einem allgemeinen Lifting-schema mit drei Schritten, nämlich der Polyphasenzerlegung, der Prädiktion und der Aktualisierung. In Fig. 4 ist die entsprechende Analyse/Synthese-Filterbankstruktur gezeigt. Auf der Analysesseite werden die ungeraden Abtastwerte eines gegebenen Signals durch eine lineare Kombination der geradzahligen Abtastwerte unter Verwendung des Prädiktionsoperators P und eines Hochpassignals H auf die Prädiktionsrestwerte gefiltert. Ein entsprechendes Tiefpassignal l wird durch Addieren einer Linearkombination der Prädiktionsrestwerte h mit den geradzahligen Abtastwerten des Eingangssignals s unter Verwendung des Aktualisierungsoperators gebildet. Der gleichungsmäßige Zusammenhang der in Fig. 4 gezeigten Größen h und l sowie der prinzipiellen Ausführungsformen der Operatoren P und U ist in Fig. 5a gezeigt.

Da sowohl der Prädiktionsschritt als auch der Aktualisierungsschritt vollständig invertierbar sind, kann die entsprechende Transformation als kritisch abgetastete Perfektrekonstruktionsfilterbank betrachtet werden. Die Synthese-filterbank umfasst die Anwendung des Prädiktionsoperators und des Aktualisierungsoperators in umgekehrter Reihenfolge mit den invertieren Vorzeichen im Summationsprozess, wobei die geraden und die ungeraden Polyphasenkomponenten verwendet werden. Für eine Normierung der Hochpass/Tiefpass-Komponenten werden entsprechende Skalierungsfaktoren $F_l$ und $F_h$ verwendet. Diese Skalierungsfaktoren müssen nicht unbedingt verwendet werden, sie können jedoch eingesetzt werden, wenn Quantisiererschrittgrößen während der Codierung ausgewählt werden.

Es zeigt f[x,k] ein Videosignal mit den Raumkoordinaten $x = (x,y)^T$, wobei k die Zeitkoordinate ist. Der Prädiktionsoperator P und der Aktualisierungsoperator U für die zeitliche Zerlegung unter Verwendung der Liftingdarstellung des Haar-Wavelets ist gegeben, wie es links in Fig. 5b gezeigt ist. Für die 5/3-Transformation ergeben sich die entsprechenden Operatoren so, wie es rechts in Fig. 5b gezeigt ist. Die Erweiterung auf die bewegungskompensierte zeitliche Filterung wird durch Modifikation des Prädiktionsoperators und des Aktualisierungsoperators wie in Fig. 5c gezeigt, erreicht. Besonders sei auf die Referenzindizes r > 0 verwiesen, die eine allgemeine Bild-adaptive bewegungskompensierte Filterung erlauben. Durch diese Referenzindizes kann sichergestellt werden, dass bei dem in Fig. 4 dargestellten Szenario nicht immer lediglich zwei zeitlich unmittelbar aufeinanderfolgende Bilder in ein Hochpassbild und in ein Tiefpassbild zerlegt werden, sondern dass zum Beispiel ein erstes Bild mit einem dritten Bild einer Sequenz bewegungskompensiert gefiltert werden kann. Alternativ ermöglich die geeignete Wahl der Referenzindizes, dass z. B. auch ein und dasselbe Bild einer Folge von Sequenzen dazu verwendet werden kann, als Basis für den Bewegungsvektor zu dienen. Dies bedeutet, dass die Referenzindizes beispielsweise bei einer Folge von acht Bildern ermöglichen, dass alle Bewegungsvektoren z. B. auf das vierte Bild dieser Folge bezogen sind, so dass sich am Ende durch Verarbeitung dieser acht Bilder durch das Filterschema in Fig. 4 ein einziges Tiefpassbild ergibt, und dass sich sieben Hochpassbilder (Erweiterungsbilder) ergeben, und dass sämtliche Bewegungsvektoren, wo bei jedem Bewegungsvektor ein Erweiterungsbild zugeordnet ist, auf ein- und dasselbe Bild der ursprünglichen Sequenz beziehen.

Wenn somit ein- und dasselbe Bild einer Sequenz als Referenz für die Filterung mehrerer weiterer Bilder verwendet wird, führt dies zu einer nicht dem Faktor 2 gehorchenden zeitlichen Auflösungsskalierung, was für bestimmte Anwendungen von Vorteil sein kann. Es wird in den unteren Zweig der Analyse-Filterbank in Fig. 4 immer dasselbe Bild, nämlich beispielsweise das vierte Bild der Folge aus acht Bildern, eingespeist. Das Tiefpassbild ist bei jeder Filterung dasselbe, nämlich das letztendlich erwünschte einzige Tiefpassbild der Folge von Bildern. Wenn der Aktualisierungsparameter Null ist, wird das Basisbild einfach durch den unteren Zweig gewissermaßen "durchgeschleust". Dagegen ist das Hochpassbild immer abhängig von dem entsprechenden anderen Bild der ursprünglichen Folge und dem Prädiktionsoperator, wobei der zu diesem Eingangsbild zugehörige Bewegungsvektor bei der Prädiktion verwendet wird. In diesem Fall kann man daher sagen, dass das letztendlich erhaltene Tiefpassbild einem bestimmten Bild der ursprünglichen Folge von Bildern zugeordnet ist, und dass auch jedes Hochpassbild einem Bild der ursprünglichen Folge zugeordnet ist, wobei genau die Abweichungen des ursprünglichen Bilds der Folge (einer Bewegungskompensation) von dem gewählten Basisbild der Folge (das in dem unteren Zweig der Analyse-Filterbank von Fig. 4 eingespeist wird) entspricht. Wenn jeder Aktualisierungsparameter $M_{01}$, $M_{11}$, $M_{21}$ und $M_{31}$ gleich Null ist, führt dies dazu, dass das in den unteren Zweig 73 der vierten Ebene eingespeiste Bild einfach nach unten "durchgeschleift" wird. Das Tiefpassbild TP1 wird gewissermaßen "wiederholt" in die Filterbank eingespeist, während die anderen Bilder - gesteuert durch die Referenzindizes - nach und nach in den Eingang 64 von Fig. 3 eingeführt werden.

Wie es aus den vorstehenden Gleichungen zu sehen ist, liefern die Prädiktions- bzw. Aktualisierungsoperatoren für die bewegungskompensierte Filterung für die zwei verschiedenen Wavelets unterschiedliche Prädiktionen. Wenn das Haar-Wavelet verwendet wird, wird eine unidirektionale bewegungskompensierte Prädiktion erreicht. Wird dagegen das 5/3-Spline-Wavelet eingesetzt, so spezifizieren die beiden Operatoren eine bidirektionale bewegungskompensierte Prädiktion.

Da die bidirektionale kompensierte Prädiktion allgemein die Energie des Prädiktionsrestwerts reduziert, jedoch die Bewegungsvektorrate im Vergleich zu einer unidirektionalen Prädiktion erhöht, ist es wünschenswert, dynamisch zwischen der unidirektionalen und der bidirektionalen Prädiktion hin- und herzuschalten, was bedeutet, dass zwischen einer Liftingdarstellung des Haar-Wavelets und des 5/3-Splin-Wavelets abhängig von einem bildabhängigen Steuersignal hin- und hergeschaltet werden kann. Das erfindungsgemäße Konzept, das keine geschlossene Rückkopplungsschleife zur zeitlichen Filterung verwendet, erlaubt ohne weiteres diese makroblockweise Hin- und Herschaltung zwischen zwei Wavelets, was wiederum der Flexibilität und insbesondere der Datenrateneinsparung dient, die optimal signalangepasst durchführbar ist.

Um die Bewegungsfelder oder allgemeiner gesagt die Prädiktionsdatenfelder $M_P$ und $M_U$ darzustellen, kann vorteilhafterweise auf die bestehende Syntax der B-Slices in H.264/AVC zurückgegriffen werden.

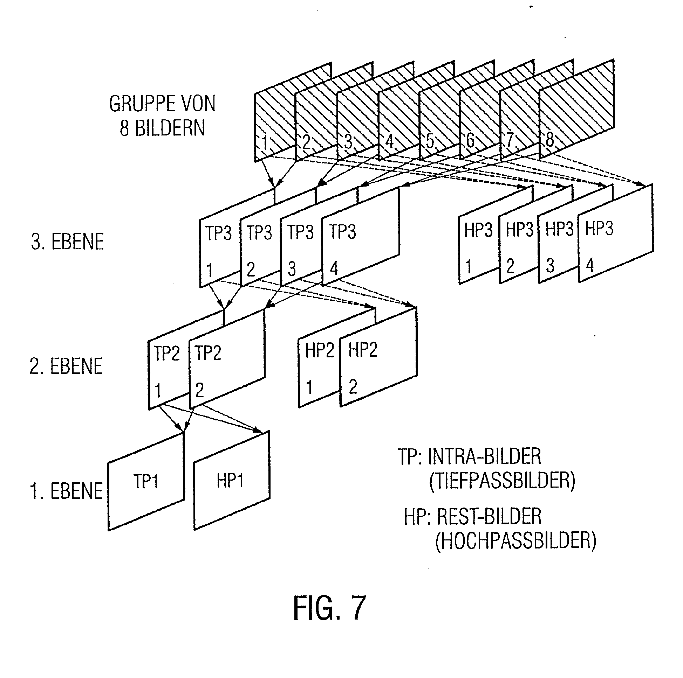

Durch Kaskadieren der paarweisen Bildzerlegungsstufen wird eine dyadische Baumstruktur erhalten, die eine Gruppe von $2'$-Bildern in $2^{n-1}$-Restbilder und ein einziges Tiefpass-(oder Intra-)Bild zerlegt, wie es anhand von Fig. 7 für eine Gruppe von acht Bildern dargestellt ist. Insbesondere zeigt Fig. 7 das Hochpass-Bild HP1 der ersten Ebene am Ausgang 22 des Filters erster Ebene sowie das Tiefpass-Bild erster Ebene am Ausgang 24 des Filters erster Ebene. Die beiden Tiefpass-Bilder TP2 am Ausgang 16 des Filters zweiter Ebene sowie die beiden Hochpass-Bilder, die aus der zweiten Ebene erhalten werden, sind in Fig. 7 als Bilder der zweiten Ebene gezeigt. Die Tiefpass-Bilder dritter Ebene liegen am Ausgang 76 des Filters dritter Ebene an, während die Hochpass-Bilder dritter Ebene am Ausgang 75 in weiterverarbeiteter Form vorliegen. Die Gruppe von acht Bildern könnte ursprünglich acht Videobilder umfassen, wobei dann der Decodierer von Fig. 3 ohne vierte Filterebene eingesetzt werden würde. Ist die Gruppe von acht Bildern dagegen eine Gruppe von acht Tiefpass-Bildern, wie sie am Ausgang 73 des Filters vierter Ebene eingesetzt werden, so kann die erfindungsgemäße MCTF-Zerlegung als Basis-Bewegungs-Prädiktor, Erweiterungs-Bewegungs-Prädiktor, bzw. als Basis-Bewegungs-Kombinierer oder Erweiterungs-Bewegungs-Kombinierer eingesetzt werden.

Allgemein gesagt werden bei dieser Zerlegung somit eine Gruppe von $2^n$ Bildern, ($2^{n+1-2}$) Bewegungsfeldbeschreibungen, ($2^{n-1}$) Restbilder sowie ein einziges Tiefpass- (oder INTRA-) Bild übertragen.

Sowohl der Basis-Bewegungs-Kompensierer als auch der Erweiterungs-Bewegungs-Kompensierer werden vorzugsweise durch einen Basis-Steuerparameter bzw. einen Erweiterungs-Steuerparameter gesteuert, um eine abhängig von einer bestimmten Rate festgelegte optimale Kombination eines Quantisierungs-Parameters (1034 oder 1036) und Bewegungsinformationen zu berechnen. Hierbei wird gemäß nachfolgender Methodik vorgegangen, um ein optimales Verhältnis bezüglich einer bestimmten maximalen Bitrate zu erhalten. So hat sich herausgestellt, dass für niedrige Bitraten, also für relativ grobe Quantisierungs-Parameter die Bewegungsvektoren stärker ins Gewicht fallen als für höhere Skalierungsschichten, bei denen relativ feine Quantisierungs-Parameter genommen werden. Daher werden für Fälle grober Quantisierung und damit niedriger Bitrate eher weniger Bewegungsdaten berechnet als für höhere Skalierungsschichten. So wird es bei höheren Skalierungsschichten bevorzugt, in Sub-Makroblock-Modi zu gehen, um für eine gute Qualität und für eine optimale Situation bei der hohen Bitrate eher viele Bewegungsdaten zu berechnen als im Fall einer niedrigen Bitrate, bei der die Bewegungsdaten prozentual stärker ins Gewicht fallen im Hinblick auf die Restdaten als im Fall einer höheren Skalierungsschicht. Dies wird nachfolgend dargelegt.

Die Bilder A und B seien gegeben, die entweder ursprüngliche Bilder sind, oder Bilder, die Tiefpaß-Signale darstellen, die in einer vorherigen Analyse-Stufe erzeugt werden. Ferner werden die entsprechenden Arrays von Luma-Abtastwerten a[] und b[] bereitgestellt. Die Bewegungsbeschreibung $M_{i0}$ wird in einer Makroblock-weisen Art und Weise folgendermaßen geschätzt:

Für alle möglichen Makroblock- und Sub-Makroblock-Teilungen eines Makroblocks i innerhalb des Bildes B werden die zugeordneten Bewegungsvektoren

$$m_i = [m_x, \ m_y]^T$$

durch Minimieren des Lagrange-Funktionals

$$\mathbf{m}_i = \arg\min_{\mathbf{m} \in S} \left\{ D_{SAD}(i, \mathbf{m}) + \lambda \cdot R(i, \mathbf{m}) \right\}$$

bestimmt,
wobei der Verzerrungsterm folgendermaßen gegeben ist:

$$D_{SAD}(i, \mathbf{m}) = \sum_{(x,y) \in P} \left| b[x, y] - a[x - m_x, y - m_y] \right|$$

Hierbei spezifiziert S den Bewegungsvektor-Suchbereich innerhalb des Referenzbildes A. P ist der Bereich, der durch die betrachtete Makroblock-Teilung oder Sub-Makroblock-Teilung überstrichen wird. R(i,m) spezifiziert die Anzahl von Bits, die benötigt werden, um alle Komponenten des Bewegungsvektors m zu übertragen, wobei λ ein fester Lagrange-Multiplizierer ist.

Die Bewegungssuche schreitet zunächst über alle Ganzzahl-Abtastwert-genauen Bewegungsvektoren in dem gegebenen Suchbereich S fort. Dann, unter Verwendung des besten Ganzzahl-Bewegungsvektors werden die 8 umgebenden Halb-Abtastwert-genauen Bewegungsvektoren getestet. Schließlich wird unter Verwendung des besten Halb-Abtastwert-genauen Bewegungsvektors die 8 umgebenden Viertel-Abtastwert-genauen Bewegungsvektoren getestet.

Für die Halb- und die Viertel- Abtastwert-genaue Bewegungsvektor-Verbesserung wird der Term

$$a[x - m_x, y - m_y]$$

als Interpolationsoperator interpretiert.

Die Modus-Entscheidung für den Makroblock-Modus und den Sub-Makroblock-Modus folgt grundsätzlich demselben Lösungsansatz. Von einem gegebenen Satz von möglichen Makroblock- oder Sub-Makroblock-Modi $S_{mode}$, wird der Modus $p_i$ der das folgende Lagrange-Funktional minimiert, ausgewählt:

$$p_i = \arg \min_{p \in S_{mode}} \left\{ D_{SAD}(i, p) + \lambda \cdot R(i, p) \right\}$$

Der Verzerrungsterm ist folgendermaßen gegeben:

$$D_{SAD}(i, p) = \sum_{(x,y) \in P} \left| b[x, y] - a[x - m_x[p, x, y], y - m_y[p, x, y]] \right|$$

wobei P den Makroblock oder Sub-Makroblock-Bereich spezifiziert, und wobei m[p,x,y] der Bewegungsvektor ist, der dem Makroblock- oder Sub-Makroblock-Modus p und der Teilung oder Sub-Makroblock-Teilung zugeordnet ist, die die Luma-Position (x,y) umfasst.

Der Ratenterm R(i,p) stellt die Anzahl von Bits dar, die der Wahl des Codiermodus p zugeordnet sind. Für die Bewegungs-kompensierten Codiermodi umfasst derselbe die Bits für den Makroblock-Modus (falls zutreffend), den bzw. die Sub-Makroblock-Modi (falls zutreffend) und den bzw. die Bewegungsvektoren. Für den Intra-Modus umfasst derselbe die Bits für den Makroblock-Modus und die Arrays von quantisierten Luma- und Chroma-Transformation-Koeffizienten-Pegeln.

Der Satz von möglichen Sub-Makroblock-Modi wird durch

```
{P_8x8, P_8x4, P_4x8, P_4x4}
```

gegeben. Der Satz von möglichen Makroblock-Modi wird durch

```
{P_16x16, P_16x8, P_8x16, P_8x8, INTRA}
```

gegeben, wobei der INTRA-Modus nur verwendet wird, wenn eine Bewegungsfeldbeschreibung $M_{i0}$, die für den Prädiktionsschritt verwendet wird, geschätzt wird.

Der Lagrange-Multiplizierer $\lambda$ wird abhängig von dem Basis-schicht-Quantisierungs-Parameter für das bzw. die Hochpass-Bilder $QP_{Hi}$ der Zerlegungsstufe, für die das Bewegungsfeld geschätzt wird, gemäß folgender Gleichung gesetzt:

$$\lambda = 0.33 \cdot 2^{\wedge}(QP_{Hi}/3 - 4)$$

Erfindungsgemäß wird das in Fig. 8 gezeigte Zerlegungsschema verwendet, von dem ausgegangen wird, dass es einen vernünftigen Kompromiss zwischen zeitlicher Skalierbarkeit und Codier-Wirkungsgrad ermöglicht. Die Sequenz der ursprünglichen Bilder wird als Sequenz von Eingangsbildern A, B, A, B, A, B... A, B behandelt. Somit liefert dieses Schema eine Stufe mit optimaler zeitlicher Skalierbarkeit (gleicher Abstand zwischen den Tiefpass-Bildern). Die Sequenz von Tiefpass-Bildern, die als Eingangs-Signal in alle folgenden Zerlegungsstufen verwendet werden, werden als Sequenzen von Eingangsbildern B, A, A, B, B, A ... A, B behandelt, wodurch die Abstände zwischen den Tiefpass-Bildern, die zerlegt werden in dem folgenden Zwei-Kanal-Analyse-Schema, klein gehalten werden, wie es in Fig. 8 zu sehen ist.

Nachfolgend wird bezugnehmend auf die Figuren 6a bis 6d auf bevorzugte Implementierungen sowohl der Bewegungsdaten-Zwischen-Schicht-Prädiktion als auch der Restdaten-Zwischen-Schicht-Prädiktion eingegangen. Um eine räumliche bzw. eine SNR-Skalierbarkeit zu erreichen, werden also prinzipiell Bewegungsdaten und Texturdaten aus einer niedrigeren Skalierungsschicht zu Prädiktionszwecken für eine höheren Skalierungsschicht verwendet. Hierbei wird insbesondere bei der räumlichen Skalierbarkeit eine Hochtastung bzw. ein Upsampling der Bewegungsdaten nötig sein, bevor sie als Prädiktion für die Decodierung von räumlichen Erweiterungsschichten eingesetzt werden können. Die Bewegungs-Prädiktionsdaten einer Basis-Schicht-Darstellung werden unter Verwendung eines Teilsatzes der existierenden B-Slice-Syntax von AVC übertragen. Zum Codieren des Bewegungsfeldes einer Erweiterungsschicht werden vorzugsweise zwei zusätzliche Makroblock-Modi eingeführt.

Der erste Makroblock-Modus ist "Base_Layer_Mode" und der zweite Modus ist der "Qpel_Refinement_Mode". Zum Signalisieren dieser zwei zusätzlichen Makroblock-Modi werden zwei Flags, nämlich die BLFlag und QrefFlag, zur Makroblock-Schicht-Syntax hinzugeführt, und zwar vor dem Syntaxelement mb_mode, wie es in Fig. 1 gezeigt ist. So signalisiert die erste Flag BLFlag 1098 den Base-Layer-Modus, während die andere Flag 1100 den Qpel-Refinement-Modus symbolisiert. Ist eine solche Flag gesetzt, so hat sie den Wert 1, und der Datenstrom ist derart, wie es in Fig. 6a gezeigt ist. Wenn also die Flag 1098 den Wert 1 hat, spielen die Flag 1100 und das Syntaxelement Makroblock-Modus 1102 keine weitere Rolle. Hat dagegen die Flag 1098 den Wert null, so ist sie nicht gesetzt, und es kommt die Flag 1100 zum Tragen, die, wenn sie gesetzt ist, wieder das Element 1102 überbrückt. Haben dagegen beide Flags 1098 und 1100 einen Wert null, also sind sie beide nicht gesetzt, so wird der Makroblock-Modus im Syntaxelement 1102 ausgewertet.

Wenn also BLFlag = 1 ist, so wird der Basis-Layer-Modus verwendet, und für den entsprechenden Makroblock wird keine weitere Information verwendet. Dieser Makroblock-Modus zeigt an, dass die Bewegungs-Prädiktions-Informationen einschließlich der Makroblock-Partitionierung des entsprechenden Makroblocks der Basisschicht direkt so für die Erweiterungsschicht verwendet wird. Es sei darauf hingewiesen, dass hier und in der gesamten Anmeldung der Term "Basis-Schicht" eine nächstniedrigere Schicht bezüglich der gegenwärtig betrachteten Schicht, also der Erweiterungsschicht, darstellen soll. Wenn die Basisschicht eine Schicht mit der halben räumlichen Auflösung darstellt, wird das Bewegungsvektor-Feld, also das Feld von Bewegungsvektoren einschließlich der Makroblock-Partitionierung entsprechend skaliert, wie es in Fig. 6b dargestellt ist. In diesem Fall umfasst der gegenwärtige Makroblock dieselbe Region wie ein 8x8-Sub-Makroblock des Basis-Layer-Bewegungsfeld. Wenn somit der entsprechende Basis-Layer-Makroblock in einem Direct-, 16x16-, 16x8- oder 8x16-Modus codiert ist, oder wenn der entsprechende Basis-Layer-Sub-Makroblock in dem 8x8-Modus oder in dem Direct-8x8-Modus codiert ist, dann wird der 16x16-Modus für den gegenwärtigen Makroblock verwendet. Wenn andernfalls der Basis-Schicht-Sub-Makroblock im 8x4-, 4x8- oder 4x4-Modus codiert ist, ist der Makroblock-Modus für den gegenwärtigen Makroblock = 16x8, 8x16 oder 8x8 (mit allen Sub-Makroblock-Modi = 8x8). Wenn der Basis-Schicht-Makroblock einen INTRA-Makroblock darstellt, wird der gegenwärtige Makroblock auf INTRA_BASE gesetzt, was bedeutet, dass es sich um einen Makroblock mit einer Prädiktion von der Basisschicht handelt. Für die Makroblock-Partitionierungen des gegenwärtigen Makroblocks werden dieselben Referenzindizes wie für die entsprechenden Makroblock/Sub-Makroblock-Partitionierungen des Basis-Schicht-Blocks verwendet. Die zugeordneten Bewegungsvektoren werden mit einem Faktor von 2 multipliziert. Dieser Faktor gilt für die in Fig. 6b gezeigte Situation, bei der eine Basis-schicht 1102 die halbe Fläche bzw. Anzahl in Pixel umfasst als die Erweiterungsschicht 1104. Ist das Verhältnis der räumlichen Auflösung der Basisschicht zur räumlichen Auflösung der Erweiterungsschicht ungleich 1/2, so werden auch entsprechende Skalierungsfaktoren für die Bewegungsvektoren verwendet.

Ist dagegen die Flag 1098 gleich null und die Flag 1100 gleich 1, wird der Makroblock-Modus Qpel_Refinement_Mode signalisiert. Die Flag 1100 ist vorzugsweise nur vorhanden, wenn die Basisschicht eine Schicht mit der halben räumlichen Auflösung der gegenwärtigen Schicht darstellt. Andernfalls ist der Makroblock-Modus (Qpel_Refinement_Mode) nicht in dem Satz von möglichen Makroblock-Modi enthalten. Dieser Makroblock-Modus ist ähnlich dem Basis-Layer-Modus. Die Makroblock-Partitionierung sowie die Referenzindizes und die Bewegungsvektoren werden wie beim Basis-Layer-Modus abgeleitet. Für jeden Bewegungsvektor gibt es jedoch einen zusätzliche Viertel-Abtastwert-Bewegungsvektor-Verfeinerung -1,0 oder +1 für jede Bewegungsvektor-Komponente, die zusätzlich übertragen und dem abgeleiteten Bewegungsvektor hinzugefügt wird.

Wenn die Flag 1098 = null ist und die Flag 1100 = null ist, oder wenn die Flag 1100 nicht vorhanden ist, werden der Makroblock-Modus sowie die entsprechenden Referenzindizes und Bewegungsvektor-Differenzen wie üblich spezifiziert. Dies bedeutet, dass der komplette Satz von Bewegungsdaten für die Erweiterungsschicht genauso wie für die Basis-schicht übertragen wird. Erfindungsgemäß wird jedoch auch hier die Möglichkeit vorgesehen, den Basis-Schicht-Bewegungsvektor als Prädiktor für den aktuellen Erweiterungs-Schicht-Bewegungsvektor (anstatt des räumlichen Bewegungsvektor-Prädiktors) zu verwenden. So soll die Liste X (wobei X zwischen 0 und 1 ist) die Referenzindex-Liste des betrachteten Bewegungsvektors spezifizieren. Wenn alle nachfolgenden Bedingungen wahr sind, wird, wie es in Fig. 6c gezeigt ist, eine Flag MvPrdFlag übertragen, und zwar für jede Bewegungsvektor-Differenz:

- der Basis-Schicht-Makroblock, der die gegenwärtigen Makroblock/Sub-Makroblock-Partitionen umfasst, ist nicht in einem INTRA-Makroblock-Modus codiert;

- die Basis-Schicht-Makroblock/Sub-Makroblock-Partitionierung, die den oberen linken Abtastwert der gegenwärtigen Makroblock/Sub-Makroblock-Partitionierung überdeckt, verwendet die List X oder eine Bi-Prädiktion;

- der Listen-X-Referenzindex der Basis-Schicht-Makroblock/Sub-Makroblock-Partitionierung, der das obere linke Sample der gegenwärtigen Makroblock/Sub-Makroblock-Partitionierung umfasst, ist gleich dem Listen-X-Referenzindex der gegenwärtige Makroblock/Sub-Makroblock-Partitionierung.

Wenn die Flag 1106 von Fig. 6c nicht vorhanden ist, oder wenn diese Flag 1106 = null ist, wird der räumliche Bewegungsvektor-Prädiktor so spezifiziert, wie es im Standard AVC der Fall ist. Andernfalls, wenn die Flag 1106 vorhanden und = 1 ist, wird der entsprechende Basis-Schichtvektor als Bewegungsvektor-Prädiktor verwendet. In diesem Fall wird der Listen-X-Bewegungsvektor (wobei X=0 oder 1 ist) der gegenwärtigen Makroblock/Sub-Makroblock-Partitionierung durch Hinzufügen der übertragenen Listen-X-Bewegungsvektor-Differenz zu dem möglicherweise skalierten Listen-X-Bewegungsvektor der Basis-Schicht-Makroblock/Sub-Makroblock-Partitionierung erhalten.

Die Flags 1098, 1100 und 1106 stellen somit zusammen eine Möglichkeit dar, die allgemein in Fig. 1a gezeigte Bewegungsdaten-Flag 1048 bzw. allgemein ein Bewegungsdaten-Steuersignal 1048 zu implementieren. Selbstverständlich existieren hierfür verschiedene andere Möglichkeiten der Signalisierung, wobei natürlich auch eine feste Vereinbarung zwischen dem Sender und dem Empfänger verwendet werden kann, die eine Reduktion an Signalisierungsinformationen erlaubt.

Zusammenfassend wird anhand der Figuren 1e, 1f und 1g eine detaillierte Implementierung des Erweiterungs-Bewegungskompensierers 1014 von Fig. 1a bzw. des Erweiterungs-Bewegungsdaten-Ermittlers 1078 von Fig. 2 näher dargelegt.

Bezug nehmend auf Fig. 1e ist zu sehen, dass der Erweiterungs-Bewegungskompensierer 1014 prinzipiell zwei Dinge tun muss. So muss er zunächst die Erweiterungs-Bewegungsdaten, also typischerweise die gesamten Bewegungsvektoren berechnen und dem Erweiterungs-Bewegungs-Prädiktor 1016 zuführen, damit er diese Vektoren gewissermaßen in uncodierter Form verwenden kann, um die Erweiterungs-Folge von Restfehlerbildern zu erhalten, die im Stand der Technik typischerweise adaptiv und Block-für-Block durchführen zu können. Eine andere Sache ist jedoch die Erweiterungs-Bewegungsdaten-Verarbeitung, also wie die zur bewegungskompensierten Prädiktion verwendeten Bewegungsdaten nunmehr so stark als möglich komprimiert werden und in einem Bitstrom geschrieben werden. Hierzu, damit etwas in dem Bitstrom geschrieben werden kann, müssen entsprechende Daten zum Erweiterungs-Bildcodierer 1028 gebracht werden, wie es anhand von Fig. 1e dargestellt ist. Der Erweiterungs-Bewegungsdaten-Verarbeitungseinrichtung 1014b kommt also die Aufgabe zu, die in den Erweiterungs-Bewegungsdaten, die die Erweiterungs-Bewegungsdaten-Berechnungseinrichtung 1014a ermittelt hat, enthaltene Redundanz im Bezug auf die Basisschicht so stark als möglich zu reduzieren.

Die Basis-Bewegungsdaten oder die hochgetasteten Basis-Bewegungsdaten können erfindungsgemäß sowohl von der Erweiterungs-Bewegungsdaten-Berechnungseinrichtung 1014a zur Berechnung der tatsächlich zu verwendeten Erweiterungs-Bewegungsdaten eingesetzt werden, oder können auch nur zur Erweiterungs-Bewegungsdaten-Verarbeitung, also zur Erweiterungs-Bewegungsdaten-Kompression verwendet werden, während sie für die Berechnung der Erweiterungs-Bewegungsdaten keine Rolle spielen. Während die beiden Möglichkeiten 1.) und 2.) von Fig. 1g Ausführungsbeispiele zeigen, bei denen die Basis-Bewegungsdaten bzw. die hochgetasteten Basis-Bewegungsdaten bereits bei der Erweiterungs-BewegungsdatenBerechnung eingesetzt werden, zeigt das Ausführungsbeispiel 3.) von Fig. 1b einen Fall, bei dem Informationen über die Basis-Bewegungsdaten nicht zur Berechnung der Erweiterungs-Bewegungsdaten, sondern lediglich zur Codierung bzw. Gewinnung von Restdaten eingesetzt werden.

Fig. 1f zeigt die decodiererseitige Implementierung der Erweiterungs-Bewegungsdaten-Ermittlungseinrichtung 1078, die ein Steuermodul 1078a zur blockweisen Steuerung aufweist, welches die Signalisierungsinformationen vom Bitstrom bzw. vom Erweiterungs-Bild-Decodierer 1066 enthält. Ferner umfasst der Erweiterungs-Bewegungsdaten-Ermittler 1078 eine Erweiterungs-Bewegungsdaten-Rekonstruktionseinrichtung 1078b, die entweder allein unter Verwendung der decodierten Basis-Bewegungsdaten oder decodierten hochgetasteten Basis-Bewegungsdaten oder aber durch Kombination aus Informationen über die decodierten Basis-Bewegungsdaten und von dem Erweiterungs-Bild-Decodierer 1066 aus der Erweiterungs-Skalierungsschicht 1004 extrahierten Restdaten tatsächlich die Bewegungsvektoren des Erweiterungs-Bewegungsdaten-Feldes ermittelt, die dann von dem Erweiterungs-Bewegungs-Kombinierer 1076 verwendet werden können, der als üblicher Kombinierer ausgebildet sein kann, um die encodiererseitige bewegungskompensierte Prädiktion wieder rückgängig zu machen.

Nachfolgend wird auf die verschiedenen Ausführungsbeispiele, wie sie in Fig. 1g zur Übersicht dargestellt sind, eingegangen. Wie es bereits anhand von Fig. 6a dargelegt worden ist, signalisiert die BLFlag 1098 eine komplette Übernahme der hochskalierten Basis-Bewegungsdaten für die Erweiterungs-Bewegungs-Prädiktion. In diesem Fall ist die Einrichtung 1014a ausgebildet, um die Basis-Bewegungsdaten komplett zu übernehmen bzw. im Falle von unterschiedlichen Auflösungen der verschiedenen Schichten die Basis-Bewegungsdaten in hochskalierter Form zu übernehmen und zur Einrichtung 1016 zu übermitteln. Zum Erweiterungs-Bildcodierer wird jedoch keine Information über Bewegungsfelder oder Bewegungsvektoren übermittelt. Stattdessen wird lediglich für jeden Block, sei es ein Makroblock oder ein Sub-Makroblock, eine eigene Flag 1098 übertragen.

Auf Decodiererseite bedeutet dies, dass die Einrichtung 1078a von Fig. 1f für einen Block die Flag 1098 decodiert und dann, wenn sie aktiv war, die aus der Basisschicht vorhandenen decodierten Basis-Bewegungsdaten oder die decodierten hochgetasteten Basis-Bewegungsdaten verwendet, um daraus die Erweiterungs-Bewegungsdaten zu berechnen, die dann zum Block 1076 geliefert werden. Bewegungsvektor-Restdaten benötigt die Einrichtung 1078 in diesem Fall nicht.

Bei dem zweiten Ausführungsbeispiel der vorliegenden Erfindung, das durch die Flag QrefFlag 1100 signalisiert ist, wird der Basis-Bewegungsvektor in die Erweiterungs-Bewegungsdatenberechnung, die durch die Einrichtung 1014a ausgeführt wird, integriert. Wie es in Fig. 1g im Abschnitt 2.) dargestellt ist und vorstehend beschrieben worden ist, findet die Bewegungsdatenberechnung bzw. die Berechnung der Bewegungsvektoren m dadurch statt, dass das Minimum des Ausdrucks

$$(D + \lambda R)$$

gesucht wird. In den Verzerrzungsterm D geht der Unterschied zwischen einem Block eines aktuellen Bildes B und einem durch einen bestimmten potentiellen Bewegungsvektor verschobenen Block eines vorausgehenden und/oder späteren Bildes ein. In den Faktor λ geht der Quantisierungsparameter des Erweiterungs-Bild-Codierers, der in Fig. 1a mit 1036 bezeichnet ist, ein. Der Ausdruck R liefert Informationen über die Anzahl von Bits, die zur Codierung eines potentiellen Bewegungsvektors verwendet wird.

Üblicherweise wird jetzt eine Suche unter verschiedenen potentiellen Bewegungsvektoren durchgeführt, wobei für jeden neuen Bewegungsvektor der Verzerrungsterm D berechnet wird, und der Ratenterm R berechnet wird, und wobei der Erweiterungs-Quantisierungs-Parameter 1036, der vorzugsweise fest ist, jedoch ebenfalls variieren könnte, berücksichtigt wird. Der beschriebene Summenterm wird für verschiedene potentielle Bewegungsvektoren ausgewertet, wonach der Bewegungsvektor genommen wird, der das minimale Ergebnis der Summe liefert.

Erfindungsgemäß wird nunmehr der Basis-Bewegungsvektor des entsprechenden Blocks aus der Basisschicht ebenfalls in diese iterative Suche integriert. Sollte er das Suchkriterium erfüllen, so muss wieder lediglich die Flag 1100 übertragen werden, es müssen jedoch keine Restwerte oder etwas anderes für diesen Block übertragen werden. Die Einrichtung 1014a verwendet somit dann, wenn der Basis-Bewegungsvektor das Kriterium (Minimum des vorstehenden Ausdrucks) für einen Block erfüllt, diesen Basis-Bewegungsvektor, um ihn zur Einrichtung 1016 zu übermitteln. Zum Erweiterungs-Bildcodierer wird jedoch lediglich die Flag 1100 übermittelt.

Auf Decodiererseite bedeutet dies, dass die Einrichtung 1078a, wenn sie die Flag 1100 decodiert, die Einrichtung 1078b ansteuert, um für diesen Block den Bewegungsvektor aus den Basis-Bewegungsdaten zu ermitteln, da der Erweiterungs-Bild-Decodierer keine Restdaten übermittelt hatte.

Bei einer Variation der zweiten Ausführungsform wird in die iterative Suche nicht nur der Basis-Bewegungsvektor, sondern eine Vielzahl von von dem Basis-Bewegungsvektor abgeleiteten (leicht) veränderten Basis-Bewegungsvektoren in die Suche integriert. Je nach Implementierung kann jede Komponente des Bewegungsvektors unabhängig voneinander um ein Inkrement erhöht oder erniedrigt werden, oder gleich gelassen werden. Dieses Inkrement kann eine bestimmte Granularität eines Bewegungsvektors darstellen, z. B. einen Auflösungsschritt, einen Halb-Auflösungsschritt oder einen Viertel-Auflösungsschritt. Erfüllt ein solcher veränderter Basis-Bewegungsvektor das Suchkriterium, so wird zusätzlich zur Flag 1100 auch gewissermaßen als "Restdaten" die Veränderung, also das Inkrement, also +1, 0 oder -1 übertragen.

Ein Decodierer wird dann, aktiviert durch die Flag 1100, im Datenstrom nach dem Inkrement suchen und ferner den Basis-Bewegungsvektor oder den hochgetasteten Basis-Bewegungsvektor wieder gewinnen und im Block 1078b des Inkrement mit dem entsprechenden Basis-Bewegungsvektor kombinieren, um dann den Bewegungsvektor für den entsprechenden Block in der Erweiterungsschicht zu erhalten.

Bei der dritten Ausführungsform, die durch die Flag 1106 signalisiert wird, kann die Ermittlung der Bewegungsvektoren prinzipiell beliebig erfolgen. Im Hinblick auf volle Flexibilität kann die Einrichtung 1014a die Erweiterungs-Bewegungsdaten z. B. gemäß der in Verbindung mit dem zweiten Ausführungsbeispiel genannten Minimierungsaufgabe ermitteln. Der ermittelte Bewegungsvektor wird dann zur encodiererseitigen bewegungskompensierten Prädiktion verwendet, ohne dass auf Informationen aus der Basisschicht Rücksicht genommen wird. Die Erweiterungs-Bewegungsdaten-Verarbeitung 1014a ist in diesem Fall jedoch ausgebildet, um in die Bewegungsvektor-Verarbeitung zur Redundanzreduktion, also vor der eigentlichen arithmetischen Codierung, die Basis-Bewegungsvektoren miteinzubeziehen.

So wird gemäß dem Standard H.264/AVC eine Übertragung von Bewegungsvektordifferenzen vorgenommen, wobei Differenzen zwischen in der Nähe liegenden Blöcken innerhalb eines Bildes bestimmt werden. In der Implementierung kann die Differenz zwischen verschiedenen in der Nähe liegenden Blöcken gebildet werden, um dann die kleinste Differenz auszuwählen. Erfindungsgemäß wird nunmehr in diese Suche nach dem günstigsten Prädiktor für die Bewegungsvektordifferenz der Basis-Bewegungsvektor für den entsprechenden Block in einem Bild mit einbezogen. Erfüllt er das Kriterium, dass er als Prädiktor den kleinsten Restfehlerwert liefert, so wird dies durch die Flag 1106 signalisiert und es wird lediglich der Restfehlerwert zum Block 1028 übertragen. Erfüllt der Basis-Bewegungsvektor dieses Kriterium nicht, so wird die Flag 1106 nicht gesetzt, und es wird eine räumliche Bewegungsvektordifferenzberechnung vorgenommen.

Für einfachere Codiererimplementierungen kann jedoch auch statt der iterativen Suche einfach immer bzw. für adaptiv bestimmte Blöcke der Basis-Bewegungsvektor bzw. eine hochgetastete Version desselben als Prädiktor dienen.

Erfindungsgemäß wird auch eine Zwischen-Schicht-Prädiktion von Restdaten vorgenommen. Hierauf wird nachfolgend eingegangen. Wenn die Bewegungsinformationen von einer Schicht zur nächsten verändert werden, kann es günstig oder nicht günstig sein, Restinformationen bzw. im Falle einer MCTF-Zerlegung, Hochpass-Informationen der Erweiterungsschicht aus der Basisschicht zu prädizieren. Wenn die Bewegungsvektoren für einen Block der aktuellen Schicht zu den Bewegungsvektoren der entsprechenden Basisschicht bzw. makroblockweise zu entsprechenden Bewegungsvektoren der entsprechenden Basisschicht ähnlich sind, ist es wahrscheinlich, dass die Codiereffizienz erhöht werden kann, wenn das codierte Basis-Schicht-Restsignal (Hochpass-Signal) als Prädiktion für das Erweiterungs-Restsignal (Erweiterungs-Hochpass-Signal) verwendet wird, wodurch nur die Differenz zwischen dem Erweiterungs-Restsignal und der Basisschicht-Rekonstruktion (Leitung 1024 von Fig. 1a) codiert wird. Wenn die Bewegungsvektoren jedoch unähnlich sind, ist es sehr unwahrscheinlich, dass eine Prädiktion des Restsignals die Codiereffizienz verbessern wird. Folglich wird ein a-daptiver Lösungsansatz für die Prädiktion des Restsignals bzw. Hochpass-Signals eingesetzt. Dieser adaptive Lösungsansatz, also ob der Zwischen-Schicht-Prädiktor 1018 aktiv ist oder nicht, kann durch eine tatsächliche Berechnung des Nutzens auf der Basis des Differenzsignals erfolgen oder kann aufgrund einer Abschätzung durchgeführt werden, wie unterschiedlich ein Bewegungsvektor einer Basis-Skalierungsschicht für einen Makroblock zu einem entsprechenden Makroblock in der Erweiterungs-Skalierungsschicht ist. Ist der Unterschied kleiner als ein bestimmter Schwellenwert, so wird der Zwischen-Schicht-Prädiktor über die Steuerleitung 1030 aktiviert. Ist der Unterschied dagegen größer als ein bestimmter Schwellwert, so wird der Zwischen-Schicht-Prädiktor für diesen Makroblock deaktiviert.

Es wird eine Flag ResPrdFlag 1108 übertragen. Wenn diese Flag 1108 = 1 ist, wird das rekonstruierte Restsignal der Basisschicht als Prädiktion für das Restsignal des gegenwärtigen Makroblocks der Erweiterungsschicht verwendet, wobei nur eine Approximation des Unterschieds zwischen dem gegenwärtigen Restsignal der Erweiterungsschicht und seiner Basisschicht-Rekonstruktion codiert wird. Andernfalls ist die Flag 1108 nicht vorhanden oder gleich null. Hierbei wird das Restsignal des gegenwärtigen Makroblocks in der Erweiterungsschicht dann ohne Prädiktion aus der Basisschicht codiert.

Wenn die Basisschicht eine Schicht mit der Hälfte der räumlichen Auflösung der Erweiterungs-Schicht darstellt, wird das Restsignal unter Verwendung eines Interpolationsfilters hochgetastet, bevor das hochgetastete Restsignal der Basis-schicht als Prädiktionssignal verwendet wird. Dieses Filter ist ein Interpolations-Filter mit sechs Taps, derart, dass zur Interpolation eines Wertes der hohen räumlichen Auflösung der Erweiterungsschicht, der aufgrund der niedrigen Auflösung in der Basisschicht nicht vorhanden war, Werte aus der Umgebung verwendet werden, um ein möglichst gutes Interpolationsergebnis zu erhalten.

Interpoliert man jedoch Werte am Rand eines Transformationsblocks, und würde das Interpolations-Filter daher zur Interpolation Werte eines anderen Transformationsblocks verwenden, so wird es bevorzugt, genau dies nicht zu tun, sondern die Werte des Interpolations-Filters außerhalb des betrachteten Blocks zu synthetisieren, damit eine Interpolation mit möglichst wenig Artefakten stattfindet.

Anhand eines sogenannten Core-Experiments wurde herausgefunden, dass die Zwischen-Schicht-Prädiktion von Bewegungs- und Restwerten die Codiereffizienz des AVC-basierten MCTF-Ansatzes deutlich verbessert. Für bestimmte Testpunkte wurden PSNR-Gewinne von mehr als 1dB erhalten. Insbesondere bei sehr niedrigen Bitraten für jede räumliche Auflösung (mit Ausnahme der Basisschicht) war die Verbesserung der Rekonstruktionsqualität deutlich sichtbar.

Abhängig von der Gegebenheit, kann das erfindungsgemäße Verfahren in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das Verfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt, kann die Erfindung somit als ein Computer-Programm mit einem Programmcode zur Durchführung des Verfahrens realisiert werden, wenn das Computer-Programm auf einem Computer abläuft.

Die vorliegende Erfindung betrifft ferner ein Computer-lesbares Medium, auf dem ein skalierbarer Datenstrom mit einer ersten Skalierungsschicht und einer zweiten Skalierungsschicht samt der zugehörigen Steuerzeichen für die verschiedenen Decodierer-seitigen Einrichtungen gespeichert sind. So kann das Computer-lesbare Medium ein Datenträger sein, oder aber das Internet, auf dem ein Datenstrom von einem Anbieter zu einem Empfänger übertragen wird.

**Patentansprüche**

1. Vorrichtung zum Erzeugen einer codierten Videosequenz, die eine Basis-Skalierungsschicht (1002) und eine Erweiterungs-Skalierungsschicht (1004) aufweist, mit folgenden Merkmalen:

   einem Basis-Bewegungs-Kompensierer (1006) zum Berechnen von Basis-Bewegungsdaten, die angeben, wie sich ein Makroblock in einem aktuellen Bild bezüglich eines anderen Bildes in einer Gruppe von Bildern bewegt hat;
   einem Basis-Bewegungs-Prädiktor (1012) zum Berechnen einer Basis-Folge von Restfehlerbildern unter Verwendung der Basis-Bewegungsdaten;
   einem Basis-Bildcodierer (1010), der ausgebildet ist, um die codierte Basis-Skalierungsschicht (1002) aus der Basis-Folge von Restfehlerbildern zu berechnen;
   einem Erweiterungs-Bewegungs-Kompensierer (1014) zum Ermitteln von Erweiterungs-Bewegungsdaten;
   einem Erweiterungs-Bewegungs-Prädiktor (1016) zum Berechnen einer Erweiterungs-Folge von Restfehlerbildern;
   einem Zwischen-Schicht-Prädiktor (1018) zum Berechnen von Erweiterungs-Prädiktions-Restfehlerbildern unter Verwendung der Erweiterungs-Folge von Restfehlerbildern und unter Verwendung von Informationen (1026) über die Basis-Folge von Restfehlerbildern; und
   einem Erweiterungs-Bildcodierer (1028) zum Codieren der Erweiterungs-Prädiktions-Restfehlerbilder, um die codierte Erweiterungs-Skalierungsschicht (1004) zu erhalten.

2. Vorrichtung nach Anspruch 1,
   bei der der Basis-Bildcodierer (1010) ausgebildet ist, um eine Quantisierung mit einem Basis-Quantisierungs-Parameter (1034) durchzuführen,
   bei der der Erweiterungs-Bildcodierer (1028) ausgebildet ist, um eine Quantisierung mit einem Erweiterungs-Quantisierungs-Parameter (1036) durchzuführen, wobei der Erweiterungs-Quantisierungs-Parameter (1036) eine feinere Quantisierung als der Basis-Quantisierungs-Parameter (1034) zur Folge haben kann,
   bei der der Basis-Bildcodierer (1010) ausgebildet ist, um die mit dem ersten Quantisierungsparameter quantisierte Basis-Folge von Restfehlerbildern zu rekonstruierten, um eine rekonstruierte Basis-Folge zu erhalten und
   bei der der Zwischen-Schicht-Prädiktor (1026) ausgebildet ist, um die Erweiterungs-Prädiktions-Restfehlerbilder unter Verwendung der Erweiterungs-Folge von Restfehlerbildern und der rekonstruierten Basis-Folge von Restfehlerbildern als die Informationen über die Basis-Folge von Restfehlerbildern zu berechnen.

3. Vorrichtung nach Anspruch 1 oder 2, die ferner folgende Merkmale aufweist:

   einen Dezimierer (1032) zum Dezimieren einer Auflösung der Gruppe von Bildern, wobei der Dezimierer (1032) ausgebildet ist, um dem Basis-Bewegungs-Kompensierer (1006) eine Gruppe von Bildern mit einer Basis-Auflösung bereitzustellen, die kleiner ist als eine Erweiterungs-Auflösung einer Gruppe von Bildern, die dem Erweiterungs-Bewegungs-Kompensierer (1014) zur Verfügung gestellt wird; und
   einem Interpolierer (1022) zum räumlichen Interpolieren der Basis-Folge von Restfehlerbildern oder einer rekonstruierten Basis-Folge von Restfehlerbildern, um eine interpolierte Basis-Folge von Restfehlerbildern zu erhalten, die dem Zwischen-Schicht-Prädiktor (1018) als Informationen (1026) über die Basis-Folge von Restfehlerbildern zuführbar ist.

4. Vorrichtung nach Anspruch 3, die ferner einen Bewegungsdaten-Hochtaster (1042) aufweist, um die Basis-Bewegungsdaten an die Erweiterungs-Auflösung anzupassen.

5. Vorrichtung nach einem der vorhergehenden Ansprüche, bei der der Basis-Bewegungs-Kompensierer (1006) ausgebildet ist, um für einen Makroblock einen zweidimensionalen Bewegungsvektor zu berechnen.

6. Vorrichtung nach einem der vorhergehenden Ansprüche, bei der der Basis-Bewegungs-Prädiktor (1012) ausgebildet ist, um einen unter Verwendung der Basis-Bewegungsdaten-prädizierten Makroblock von einem aktuellen Makroblock zu subtrahieren, um einen Makroblock eines Restfehlerbildes der Basis-Folge von Restfehlerbildern zu erhalten.

7. Vorrichtung nach einem der vorhergehenden Ansprüche, bei der der Zwischen-Schicht-Prädiktor (1018) ausgebildet ist, um adaptiv für Blöcke zu entscheiden, ob ein Codiergewinn durch Anwenden einer Prädiktion im Vergleich zu einer Verwendung eines Blocks aus der Erweiterungs-Folge von Restfehlerbildern steigerbar ist.

8. Vorrichtung nach einem der vorhergehenden Ansprüche, bei der der Zwischen-Schicht-Prädiktor (1018) ausgebildet ist, um einen unter Verwendung eines Makroblocks aus der Basis-Folge von Restfehlerbildern oder der rekonstruierten Basis-Folge von Restfehlerbildern oder der interpolierten Basis-Folge von Restfehlerbildern oder der rekonstruierten und interpolierten Basis-Folge von Restfehlerbildern prädizierten Makroblock von einem aktuellen Makroblock der Erweiterungs-folge von Restfehlerbildern zu subtrahieren, um einen Makroblock eines Erweiterungs-Prädiktions-Restfehlerbilder zu erhalten.

9. Vorrichtung nach Anspruch 2, bei der der Basis-Bewegungs-Kompensierer (1006) ausgebildet ist, um die Basis-Bewegungsdaten abhängig von dem Basis-Quantisierungs-Parameter (1034), einem Verzerrungsterm und einer Datenrate zur Übertragung der Basis-Bewegungsdaten zu berechnen.

10. Vorrichtung nach Anspruch 2 oder 9, bei der der Erweiterungs-Bewegungs-Kompensierer (1006) ausgebildet ist, um die Erweiterungs-Bewegungsdaten abhängig von dem Erweiterungs-Quantisierungs-Parameter (1036), einem Verzerrungsterm und einer Datenrate zur Übertragung der Erweiterungs-Bewegungsdaten zu berechnen.

11. Vorrichtung nach einem der vorhergehenden Ansprüche, bei der der Erweiterungs-Bewegungs-Kompensierer (1006) ausgebildet ist, um abhängig von einem Modus-Steuersignal die Basis-Bewegungsdaten oder skalierte Basis-Bewegungsdaten zu verwenden.

12. Vorrichtung nach einem er vorhergehenden Ansprüche, bei der die Basis-Skalierungsschicht (1002) eine niedrigere Auflösung als die Erweiterungs-Skalierungsschicht (1004) aufweist, und bei der der Erweiterungs-Bewegungs-Kompensierer (1014) ausgebildet ist, um abhängig von einem Steuersignal (1048) Rest-Bewegungsdaten zu ermitteln, und wobei der Erweiterungs-Bildcodierer (1028) ausgebildet ist, um die Rest-Bewegungsdaten in die Erweiterungs-Skalierungsschicht (1004) zu codieren.

13. Vorrichtung nach einem der vorhergehenden Ansprüche, bei der der Basis-Bewegungs-Prädiktor (1012) und der Erweiterungs-Bewegungs-Prädiktor (1016) ausgebildet sind, um eine Bewegungs-kompensierte Prädiktions-Operation durchzuführen.

14. Vorrichtung nach einem der Ansprüche 1 bis 12, bei der der Basis-Bewegungs-Prädiktor (1012) und der Erweiterungs-Bewegungs-Prädiktor ausgebildet sind, um neben der Bewegungs-kompensierten Prädiktions-Operation auch eine Bewegungs-kompensierte Aktualisierungs-Operation durchzuführen, um eine Bewegungs-kompensierte zeitliche Zerlegung in wenigstens ein Tiefpass- und mehrere Hochpass-Bilder zu erhalten.

15. Verfahren zum Erzeugen einer codierten Videosequenz, die eine Basis-Skalierungsschicht (1002) und eine Erweiterungs-Skalierungsschicht (1004) aufweist, mit folgenden Schritten:

Berechnen (1006) von Basis-Bewegungsdaten, die angeben, wie sich ein Makroblock in einem aktuellen Bild bezüglich eines anderen Bildes in einer Gruppe von Bildern bewegt hat;
Berechnen (1012) einer Basis-Folge von Restfehlerbildern unter Verwendung der Basis-Bewegungsdaten;
Codieren (1010) von Informationen über die Basis-Folge von Restfehlerbildern, um die codierte Basis-Skalierungsschicht (1002) aus der Basis-Folge von Restfehlerbildern zu berechnen;
Ermitteln (1014) von Erweiterungs-Bewegungsdaten;
Berechnen (1016) einer Erweiterungs-Folge von Restfehlerbildern;
Berechnen (1018) von Erweiterungs-Prädiktions-Restfehlerbildern unter Verwendung der Erweiterungs-Folge von Restfehlerbildern und unter Verwendung von Informationen (1026) über die Basis-Folge von Restfehlerbildern; und
Codieren (1028) der Erweiterungs-Prädiktions-Restfehlerbilder, um die codierte Erweiterungs-Skalierungsschicht (1004) zu erhalten.

**16.** Vorrichtung zum Decodieren einer codierten Videosequenz mit einer Basis-Skalierungsschicht (1002) und einer Erweiterungs-Skalierungsschicht (1004), mit folgenden Merkmalen:

einem Basis-Bild-Decodierer (1060) zum Decodieren der Basis-Skalierungsschicht, um eine decodierte Basis-Folge von Restfehlerbildern und Basis-Bewegungsdaten zu erhalten;
einem Erweiterungs-Bild-Decodierer (1066) zum Decodieren der Erweiterungs-Skalierungsschicht, um Erweiterungs-Prädiktions-Restfehlerbilder zu erhalten;
einem Zwischen-Schicht-Kombinierer (1074) zum Kombinieren der decodierten Basis-Folge von Restfehlerbildern oder einer interpolierten Basis-Folge von Restfehlerbildern mit den Erweiterungs-Prädiktions-Restfehlerbildern, um eine Erweiterungs-Folge von Restfehlerbildern zu erhalten;
einem Erweiterungs-Bewegungs-Kombinierer (1076), der ausgebildet ist, um unter Verwendung der Erweiterungs-Folge von Restfehlerbildern und von Erweiterungs-Bewegungsdaten eine Folge von Bildern der Erweiterungs-Skalierungsschicht zu erhalten.

**17.** Vorrichtung nach Anspruch 16, bei der der Basis-Bild-Decodierer (1060) ausgebildet ist, um unter Verwendung eines Basis-Quantisierungs-Parameters zu dequantisieren, der größer als ein Erweiterungs-Quantisierungs-Parameter ist, und
bei der der Zwischen-Schicht-Kombinierer (1074) ausgebildet ist, um die decodierte Basis-Folge von Restfehlerbildern oder eine interpolierte Version derselben zu verwenden.

**18.** Vorrichtung nach einem der Ansprüche 16 oder 17, bei der die Bilder der Basis-Skalierungsschicht (1002) eine niedrigere Auflösung als die Bilder der Erweiterungs-Skalierungsschicht (1004) haben können, und
die ferner einen Restwerte-Interpolator (1070) aufweist, um die decodierte Basis-Folge von Restfehlerbildern auf die höhere Auflösung zu interpolieren.

**19.** Vorrichtung nach einem der Ansprüche 16 bis 18, bei der die Bilder der Basis-Skalierungsschicht eine niedrigere Auflösung als die Bilder der Erweiterungs-Skalierungsschicht haben, und
die ferner einen Bewegungsdaten-Hochtaster (1086) aufweist, um die Basis-Bewegungsdaten auf die Erweiterungs-Auflösung umzusetzen, um die Erweiterungs-Bewegungsdaten oder eine Prädiktion der Erweiterungs-Bewegungsdaten zu erhalten.

**20.** Vorrichtung nach Anspruch 19, bei der die codierte Videosequenz Rest-Bewegungsdaten aufweist, und
die einen Bewegungsdaten-Ermittler (1078) aufweist, um die Rest-Bewegungsdaten mit der Prädiktion der Erweiterungs-Bewegungsdaten zu kombinieren, um die Erweiterungs-Bewegungsdaten zu ermitteln.

**21.** Vorrichtung nach einem der Ansprüche 16 bis 20, bei der der Basis-Bewegungs-Kombinierer (1064) und der Erweiterungs-Bewegungs-Kombinierer ausgebildet sind, um nur eine inverse Prädiktions-Operation oder eine inverse Prädiktions-Operation und eine inverse Aktualisierungs-Operation durchzuführen.

**22.** Vorrichtung nach einem der Ansprüche 18 bis 20, bei der der Interpolator (1070) ausgebildet ist, um ein Interpolations-Filter zu verwenden, das unter Verwendung einer Mehrzahl von Pixeln in einer Umgebung des zu interpolierenden Pixels arbeitet.

**23.** Vorrichtung nach Anspruch 22, bei der das Interpolationsfilter ausgebildet ist, um dann, wenn in der Nähe des zu interpolierenden Pixels ein Pixel eines anderen Transformationsblocks vorhanden ist, anstatt des Pixels des anderen Transformationsblocks einen synthetisierten Wert zu verwenden.

**24.** Vorrichtung nach einem der Ansprüche 16 bis 23, bei der die codierte Videosequenz Erweiterungs-Bewegungsdaten für Makroblöcke aufweist, wobei den Erweiterungs-Bewegungsdaten ein Bewegungsdaten-Steuersignal (1070) zugeordnet ist, das anzeigt, ob den Erweiterungs-Bewegungsdaten ein Prädiktionssignal zugrunde liegt, das aus einem skalierten Bewegungsvektor der Basis-Bewegungsdaten abgeleitet ist, oder ob den Erweiterungs-Bewegungsdaten ein Prädiktionssignal zugrunde liegt, das nicht von den Basis-Bewegungsdaten abgeleitet ist, und wobei die Vorrichtung ausgebildet ist, um das Bewegungsdaten-Steuersignal (1070) zu lesen und abhängig von dem Steuersignal die Erweiterungs-Bewegungsdaten unter Verwendung der skalierten Version der Basis-Bewegungsdaten zu berechnen.

**25.** Vorrichtung nach einem der Ansprüche 16 bis 24, bei der die codierte Videosequenz für Makroblöcke in der Erweiterungs-Skalierungsschicht jeweils ein Zwischen-Schicht-Prädiktions-Steuersignal (1030) aufweist, das anzeigt, ob ein Makroblock aufgrund einer Zwischen-Schicht-Prädiktion erzeugt worden ist, oder ohne eine Zwischen-Schicht-Prädiktion erzeugt worden ist, und bei der die Vorrichtung ferner ausgebildet ist, um den Zwischen-Schicht-Kombinierer (1074) nur dann zu aktivieren, wenn das Zwischen-Schicht-Prädiktions-Steuersignal (1030) eine Zwischen-Schicht Prädiktion für einen betrachteten Makroblock anzeigt.

26. Vorrichtung nach Anspruch 16, die ferner folgendes Merkmal aufweist:

einen Basis-Bewegungs-Kombinierer (1064), um unter Verwendung der Basis-Bewegungsdaten und der decodierten Folge von Restfehlerbildern eine Folge von Bildern der Basis-Skalierungsschicht zu erhalten.

27. Verfahren zum Decodieren einer codierten Videosequenz mit einer Basis-Skalierungsschicht (1002) und einer Erweiterungs-Skalierungsschicht (1004), mit folgenden Schritten:

Decodieren (1060) der Basis-Skalierungsschicht, um eine decodierte Basis-Folge von Restfehlerbildern und Basis-Bewegungsdaten zu erhalten;
Decodieren (1066) der Erweiterungs-Skalierungsschicht, um Erweiterungs-Prädiktions-Restfehlerbilder zu erhalten;
Kombinieren (1074) der decodierten Basis-Folge von Restfehlerbildern oder einer interpolierten Basis-Folge von Restfehlerbildern mit den Erweiterungs-Prädiktions-Restfehlerbildern, um eine Erweiterungs-Folge von Restfehlerbildern zu erhalten;
Durchführen einer Erweiterungs-Bewegungs-Kombination (1076), um unter Verwendung der Erweiterungs-Folge von Restfehlerbildern und von Erweiterungs-Bewegungsdaten eine Folge von Bildern der Erweiterungs-Skalierungsschicht zu erhalten.

28. Verfahren nach Anspruch 27, das ferner folgenden Schritt aufweist:

Durchführen einer Basis-Bewegungs-Kombination (1064), - um unter Verwendung der Basis-Bewegungsdaten und der decodierten Folge von Restfehlerbildern, eine Folge von Bildern der Basis-Skalierungsschicht zu erhalten.

29. Computerprogramm zum Ausführen eines Verfahrens gemäß Patentanspruch 16 oder 27, wenn das Verfahren auf einem Computer läuft.

30. Computer-lesbares Medium mit einer codierten Videosequenz, die eine Basis-Skalierungsschicht (1002) und eine Erweiterungs-Skalierungsschicht (1004) aufweist, wobei die codierte Videosequenz derart ausgebildet ist, dass sie dann, wenn sie in einer Vorrichtung zum Decodieren gemäß Patentanspruch 16 decodiert wird, in einer decodierten ersten Skalierungsschicht und einer decodierten zweiten Skalierungsschicht resultiert.

FIG. 1a (ENCODER)

GGF. WEITERE ERWEITERUNGS-SCHICHTEN

VIDEOSEQUENZ — 1000

DEZIMATOR

DEZIMATOR — 1038

BEWEGUNGS-DATEN-FLAG

ZUM BILD-CODIERER — 1048

1014

ERWEITERUNGS-BEWEGUNGSKOMP. (PRÄDIKTION)

ERW.-ST.-P. — 1032

HOCH-ABTASTER — 1042

ZU 1028 — 1040

1016 — ERWEITERUNGS-BEW.-PRÄDIKTOR

BASIS-BEWEGUNGS-KOMPENSIER — 1006

BASIS-STEUERPARAMETER

1012 — BASIS-BEWEG.-PRÄDIKTOR

ZWISCHEN-SCHICHT-PRÄDIKTIONS-FLAG — 1030

ZWISCHEN-SCHICHT-PRÄDIKTOR — 1018

1026

INTERPOLATOR — 1022

1020 — 1044

1024

1008

ERWEITERUNGS-BILDCODIERER — 1028 — 1004

ERWEIT.-SKALIERG.-SCHICHT

QU.-P. — 1036

BASIS-BILDCODIERER — 1002 — 1010

BASIS-SKALIERG.-SCHICHT

QU.-P. — 1034

28

FIG. 1b (BILDCODIERER)

EP 2 538 677 A1

ZWISCHEN- SCHICHT-PRÄDIKTIONSFLAG PRO MAKROBLOCK

| GESETZT | ZWISCHEN-SCHICHT-PRÄDIKTOR IST AKTIVIERT |
|---|---|
| NICHT GESETZT | ZWISCHEN-SCHICHT-PRÄDIKTOR IST DEAKTIVIERT |

## FIG. 1c

BEWEGUNGSDATEN-FLAG PRO MAKROBLOCK

| GESETZT | BEWEGUNGSVEKTOR DER ERW.-SCHICHT AUS HOCHGETASTETEN BEWEGUNGSV. DER BASISSCHICHT ABGELEITET |
|---|---|
| NICHT GESETZT | KEINE BEWEGUNGSVEKTOR-PRÄDIKTION AUS NIEDRIGER SCHICHT |

## FIG. 1d

1014

1014a

ERWEITERUNGS-
BEWEGUNGSDATEN-
BERECHNUNG

E-BD → ZU 1016

BASIS-BD
ODER HOCH-
GETASTETE
B-BD

ERWEITERUNGS-
BD-VERARBEITUNG

ZU 1028

SIGNALISIERUNG UND
GGF. RESTDATEN

1014b

## FIG. 1e (ENCODER-SEITE)

1078a

SIGNALISIERUNG

VON 1066

GGF. RESTDATEN

BLOCKWEISE
STEUERUNG

ZU 1076

E-BD-
REKONSTRUKTION

E-BD →

1078b

DECOD.
BASIS-BD
ODER
DECOD.
HOCHGETASTETE
BASIS-BD

## FIG. 1f (DECODER-SEITE)

1. BLOCKWEISE ÜBERNAHME DER (HOCHSKALIERTEN) BASIS-BD FÜR DIE
   BEWEGUNGSPRÄDIKTION
→ KEINE ÜBERTRAGUNG VON REST-E.-BEWEGUNGSDATEN FÜR BLOCK
→ BLOCKWEISE SIGNALISIERUNG DURCH BLFLAG 1098


2. INTEGRATION DER BASIS-BEWEGUNGSVEKTOREN IM ERWEITERUNGS-
   BEWEGUNGSDATENBERECHNUNG
   GEMÄSS  m =argmin (D(i,m) + λ·R(i,m))
              λ= f (QUANT.-PARAMETER DES E-BILD-CODIERERS)

- WENN BASIS-BEW.-VEKTOR DAS SUCHKRITERIUM ERFÜLLT
→ BLOCKWEISE SIGNALISIERUNG DURCH QRefFLAG 1100
→ KEINE ÜBERTRAGUNG VON REST-E.-BEWEGUNGSDATEN FÜR BLOCK

- GGF. INTEGRATION VON (LEICHT)VERÄNDERTEN BASIS-
  BEWEGUNGSVEKTOREN IN DIE BEW-VEKTOR-SUCHE
  ZUSÄTZLICH: BLOCKWEISE ÜBERTRAGUNG DER VERÄNDERUNG DES
            BASIS-BEW.-VEKTORS ZUSÄTZLICH ZU QRefFLAG 1100


3. (BELIEBIGES) ERMITTELN DER BEWEGUNGSVEKTOREN UND
   VERWENDEN ZUR BEWEGUNGS-PRÄDIKTION
- INTEGRIEREN DES BASIS-BEW-VEKTORS BEI DER SUCHE NACH EINEM
  GÜNSTIGEN BEW.-VEKTORPRÄDIKTOR ZUR BESTIMMUNG DER
  BEWEGUNGSVEKTORDIFFERENZ
- FALLS KRITERIUM ERFÜLLT IST, SIGNALISIEREN DURCH MvPrdFLAG 1106
  UND ÜBERTRAGUNG DER DIFFERENZ

# FIG. 1g

**FIG. 2** (DECODIERER)

FIG. 3

FIG. 4

# FIG. 5a

$$h[k] = s[2k+1] - P(s[2k+1]) \qquad P(s[2k+1]) = \sum_i p_i s[2k+2i]$$

$$l[k] = s[2k] + U(s[2k]) \qquad U(s[2k]) = \sum_i u_i h[k+i]$$

# FIG. 5b

HAAR-WAVELET                                    5/3 TRANSFORMATION

$$P_{HAAR}(s[x,2k+1]) = s[x,2k] \qquad P_{5/3}(s[x,2k+1]) = \frac{1}{2}(s[x,2k] + s[x,2k+2])$$

$$U_{HAAR}(s[x,2k]) = \frac{1}{2}h[x,k] \qquad U_{5/3}(s[x,2k]) = \frac{1}{4}(h[x,k] + h[x,k-1])$$

# FIG. 5c

$$P_{HAAR}(s[x,2k+1]) = s[x+m_{P0},2k-2r_{P0}] \qquad \text{m: BEWEGUNGSVEKTOREN}$$

$$U_{HAAR}(s[x,2k]) = \frac{1}{2}h[x+m_{U0}, k+r_{U0}] \qquad \text{r: REFERENZINDIZES}$$

$$P_{5/3}(s[x,2k+1]) = \frac{1}{2}(s[x+m_{P0},2k-2r_{P0}] + s[x+m_{P1},2k+2+2r_{P1}])$$

$$U_{5/3}(s[x,2k]) = \frac{1}{4}(h[x+m_{U0}, k+r_{U0}] + h[x+m_{U1}, k-1-r_{U1}])$$

# FIG. 5d

$$P_{Intra}(s[x,2k+1]) = 0$$

$$U_{Intra}(s[x,2k]) = 0$$

FIG. 6a (MAKROBLOCK-MODUS)

FIG. 6b (HOCHTASTEN DER BEWEGUNGSDATEN)

FIG. 6c (BEWEGUNGSVEKTOR-DIFFERENZEN)

FIG. 6d (RESTWERTE-SYNTAX-ERWEITERUNG)

GRUPPE VON
8 BILDERN

3. EBENE

TP3 TP3 TP3 TP3    HP3 HP3 HP3 HP3
1    2    3    4      1    2    3    4

2. EBENE

TP2 TP2    HP2 HP2
1    2      1    2

1. EBENE    TP1    HP1

TP: INTRA-BILDER
(TIEFPASSBILDER)

HP: REST-BILDER
(HOCHPASSBILDER)

FIG. 7

GRUPPE VON
BILDERN

4. EBENE

3. EBENE

2. EBENE

1. EBENE

FIG. 8

FIG. 9 (STAND DER TECHNIK)

FIG. 10 (STAND DER TECHNIK)

FIG. 11 (STAND DER TECHNIK)

Europäisches
Patentamt

European
Patent Office

Office européen
des brevets

**EUROPÄISCHER RECHERCHENBERICHT**

Nummer der Anmeldung

EP 12 18 0680

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SCHWARZ ET AL: "Further experiments for an MCTF extension of H.264", 23. VCEG MEETING; 69. MPEG MEETING; 17-07-2004 - 23-07-2004; REDMOND,WA, US; (VIDEO CODING EXPERTS GROUP OF ITU-T SG.16),, Nr. VCEG-W06, 15. Juli 2004 (2004-07-15), XP030003415, ISSN: 0000-0454 | 1,15,16, 26-30 | INV. H04N7/26 H04N7/46 H04N7/36 H04N7/50 |
| Y | * das ganze Dokument * ----- | 2,17 | |
| X | SCHWARZ H; MARPE D; WIEGAND T: "SVC Core Experiment 2.1: Inter-layer prediction of motion and residual data", INTERNATIONAL ORGANISATION FOR STANDARDISATION ISO/IEC JTC 1/SC 29/WG 11 CODING OF MOVING PICTURES AND AUDIO, Nr. M11043, 23. Juli 2004 (2004-07-23), Seiten 1-6, XP002360488, Redmond, Washington US | 1,15,16, 26-30 | |
| Y | * Seite 1, Zeile 1 - Seite 5, Zeile 6 * ----- | 2,17 | RECHERCHIERTE SACHGEBIETE (IPC) |
| Y | EP 0 753 970 A (SHARP KABUSHIKI KAISHA) 15. Januar 1997 (1997-01-15) * Seite 8, Zeile 27 - Zeile 40; Abbildungen 6(a)-6(c) * ----- | 2,17 | H04N G06T |
| X | US 2003/165274 A1 (HASKELL BARIN GEOFFRY ET AL) 4. September 2003 (2003-09-04) * Absatz [0043] - Absatz [0077]; Abbildungen 4-12 * ----- | 1,15,16, 26-30 | |

-/--

Der vorliegende Recherchenbericht wurde für alle Patentansprüche erstellt

| Recherchenort | Abschlußdatum der Recherche | Prüfer |
|---|---|---|
| München | 8. November 2012 | McGrath, Simon |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
    ................................................................
& : Mitglied der gleichen Patentfamilie, übereinstimmendes
    Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 12 18 0680

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | FENG WU ET AL: "DCT-prediction based progressive fine granularity scalable coding", IMAGE PROCESSING, 2000. PROCEEDINGS. 2000 INTERNATIONAL CONFERENCE ON SEPTEMBER 10-13, 2000, PISCATAWAY, NJ, USA,IEEE, Bd. 3, 10. September 2000 (2000-09-10), Seiten 556-559, XP010529527, ISBN: 0-7803-6297-7 * Abbildung 2 * | 1-30 | |
| A | SANGEUN HAN ET AL: "Robust and efficient scalable video coding with leaky prediction", PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY : IEEE, US, Bd. VOL. 2 OF 3, 22. September 2002 (2002-09-22), Seiten 41-44, XP010607903, ISBN: 0-7803-7622-6 * das ganze Dokument * | 1-30 | |
| | | | RECHERCHIERTE SACHGEBIETE (IPC) |
| A | DE 101 21 259 A1 (SIEMENS AG) 18. Juli 2002 (2002-07-18) * Spalte 1, Absatz 1 - Absatz 15; Abbildungen 1-6 * | 1-30 | |

-/--

Der vorliegende Recherchenbericht wurde für alle Patentansprüche erstellt

| Recherchenort | Abschlußdatum der Recherche | Prüfer |
|---|---|---|
| München | 8. November 2012 | McGrath, Simon |

EPO FORM 1503 03.82 (P04C03)

# EP 2 538 677 A1

Europäisches Patentamt
European Patent Office
Office européen des brevets

## EUROPÄISCHER RECHERCHENBERICHT

Nummer der Anmeldung

EP 12 18 0680

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WOODS J W ET AL: "A RESOLUTION AND FRAME-RATE SCALABLE SUBBAND/WAVELET VIDEO CODER", IEEE TRANSACTIONS ON CIRCUITS AND SYSTEMS FOR VIDEO TECHNOLOGY, IEEE SERVICE CENTER, PISCATAWAY, NJ, US, Bd. 11, Nr. 9, September 2001 (2001-09), Seiten 1035-1044, XP001082208, ISSN: 1051-8215 * Seite 1038, rechte Spalte, Zeile 1 - Zeile 18 * ----- | 1-30 | |
| A | LILIENFIELD G ET AL: "Scalable high-definition video coding", PROCEEDINGS OF THE INTERNATIONAL CONFERENCE ON IMAGE PROCESSING. (ICIP). WASHINGTON, OCT. 23 - 26, 1995, LOS ALAMITOS, IEEE COMP. SOC. PRESS, US, Bd. VOL. 3, 23. Oktober 1995 (1995-10-23), Seiten 567-570, XP010197032, ISBN: 0-7803-3122-2 * Seite 568, linke Spalte, Zeile 3 - Seite 569, linke Spalte, Zeile 14; Abbildungen 2,3 * ----- | 1-30 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 8. November 2012 | McGrath, Simon |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 12 18 0680

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-11-2012

| Im Recherchenbericht angeführtes Patentdokument | Datum der Veröffentlichung | Mitglied(er) der Patentfamilie | Datum der Veröffentlichung |
|---|---|---|---|
| EP 0753970 A | 15-01-1997 | ----------------------------------------- | |
| US 2003165274 A1 | 04-09-2003 | US 6233356 B1 | 15-05-2001 |
| | | US 6526177 B1 | 25-02-2003 |
| | | US 7457474 B1 | 25-11-2008 |
| | | US 2003165274 A1 | 04-09-2003 |
| | | US 2009041123 A1 | 12-02-2009 |
| DE 10121259 A1 | 18-07-2002 | KEINE | |

EPO FORM P0461

Für nähere Einzelheiten zu diesem Anhang : siehe Amtsblatt des Europäischen Patentamts, Nr.12/82

45

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **RALF SCHÄFER ; THOMAS WIEGAND ; HEIKO SCHWARZ.** The Emerging H.264-AVC Standard. *EBU Technical Review,* Januar 2003
- **THOMAS WIEGAND ; GARY J. SULLIVAN ; GESLE BJONTEGAARD ; AJAY LOTHRA.** Overview of the H.264/AVC Video Coding Standard. *IEEE Transactions on Circuits and System for Video Technology,* Juli 2003
- **DETLEV MARPE ; HEIKO SCHWARZ ; THOMAS WIEGAND.** Context-based adaptive Binary Arithmethic Coding in the H.264/AVC Video Compression Standard. *IEEE Transactions on Circuits and Systems for Video Technology,* September 2003
- **J.-R. OHM.** Complexity and delay analysis of MCTF interframe wavelet structures. *ISO/IECJTC1/WG11 Doc.M8520,* Juli 2002

- **D. TAUBMAN.** Successive refinement of video: fundamental issues, past efforts and new directions. *Proc. of SPIE (VCIP'03,* 2003, vol. 5150, 649-663
- **W. SWELDENS.** A custom design construction of biorthogonal wavelets. *J. Appl. Comp. Harm. Anal.,* 1996, vol. 3 (2), 186-200
- **I. DAUBECHIES ; W. SWELDENS.** Factoring wavelet transforms into lifting Steps. *J. Fourier Anal. Appl.,* 1998, vol. 4 (3), 247-269
- **W. SWELDENS.** Factoring wavelet transforms into lifting steps. *J. Fourier Anal. Appl.,* 1998, vol. 4 (3), 247-269
- **HEIKO SCHWARZ ; DETLEV MARPE ; THOMAS WIEGAND.** SNR-Scalable Extension of H.264/AVC. *JVT-Treffen in Waikoloa Hawaii,* 08. Dezember 2003